# EUROPEAN PATENT SPECIFICATION

(11) **EP 1 387 069 B1**
(45) Date of publication and mention of the grant of the patent: **02.06.2010**
(21) Application number: 03016739.9
(22) Date of filing: 22.07.2003
(51) Int. Cl.: F02D 41/02, F02D 41/40, F02D 37/02

(54) **Exhaust purification apparatus and method for internal combustion engine**
Vorrichtung und Verfahren zur Abgasreinigung einer Brennkraftmaschine
Dispositif et procédé de purification de gaz d'échappement pour moteur à combustion interne

(30) Priority: 01.08.2002 JP 2002225239
(43) Date of publication of application: 04.02.2004
(73) Proprietor: NISSAN MOTOR COMPANY LIMITED, Yokohama-shi Kanagawa 221-0023 (JP)
(72) Inventor: Yoshida, Iwao, Yokohama-shi, Kanagawa, 230-0052 (JP)
(74) Representative: Grünecker, Kinkeldey, Stockmair & Schwanhäusser Anwaltssozietät

(56) References cited:
- EP-A- 0 560 991
- EP-A- 0 598 916
- US-A- 5 501 074
- US-A- 6 161 377
- HEYWOOD, JOHN: "Internal Combustion Engine Fundamentals" 1988, MCGRAW-HILL , XP002312419 * page 146 - page 148 *

## Description

The present invention relates to an exhaust purification apparatus for an internal combustion engine according to the preamble of independent claim 1 and to an exhaust purification method for an internal combustion engine according to the preamble of independent claim 32.

Such an exhaust purification apparatus as well as such an exhaust purification method can be taken from prior art document US 6,161,377. Said internal-combustion engine system includes an internal-combustion engine with a pertaining engine exhaust gas system, an emissions control device having an NOx storage catalyst arranged in the exhaust gas system, a lambda probe for detecting the engine air ratio and devices for the periodic desulfurization of the catalyst at a raised temperature and a rich air ratio of the latter, as well as to an operating process suitable for this system. The desulfurization devices comprise secondary air feeding devices for feeding secondary air into the NOx storage catalyst. During the desulfurization phases, the engine is operated at a rich air ratio and secondary air is metered into the catalyst.

A Japanese Patent Application First Publication No. 2001-271685 published on October 5, 2001 exemplifies previously proposed catalyst temperature controlling apparatus and method for a direct cylinder fuel injection internal combustion engine.

In the previously proposed catalyst temperature controlling method and apparatus, while, against a poisoning of sulfur of an NOx trap catalyst, a poisoning release thereagainst is being executed, an air-fuel ratio within a cylinder is set as λ = 1 and a split of fuel injection into a suction stroke injection (fuel injection under the suction stroke) and a compression stroke injection (fuel injection under the compression stroke) is carried out to raise an exhaust (or exhaust gas) temperature. Thus, a temperature about the NOx trap catalyst is raised to a high temperature at which the poisoning release of sulfur is enabled. In addition, during an execution of the poisoning release, to suppress a worsening of a fuel consumption, as a demand (or request) on a rise in temperature of the catalyst becomes higher, a strength of an intake air ripple is weakened and the compression stroke fuel injection timing is retarded. In a case where a rate of the fuel injection quantity under the compression stroke to a total fuel injection quantity for four strokes of the engine per cylinder is varied from 20 % to 60 %, an exhaust gas temperature becomes higher as the rate of fuel injection quantity under the compression stroke becomes larger.

It is desirable that the poisoning release is finished in a time period as short as possible since the poisoning release control cannot avoid the worsening of a fuel economy to raise the exhaust gas temperature due to a promotion of an after burning.

However, in the previously proposed catalyst temperature controlling apparatus and method described above, the mutually similar controls before and after the catalyst temperature has reached to a high temperature required to release the poisoning are merely carried out. Since no consideration is given to an exhaust (or exhaust gas) composition, such an exhaust composition that a poisoning release performance gives an optimum is varied in accordance with the catalyst temperature. In spite of this fact, this is not effectively utilized. Therefore, a total time duration to end the poisoning release requires a long time. The worsening of the fuel economy cannot be suppressed.

It is, therefore, an object of the present invention to provide exhaust purification apparatus and method for an internal combustion engine which, when the poisoning release of the exhaust purification catalyst is carried out, can improve an efficiency of the poisoning release, can shorten a time it takes to perform the poisoning'release, and can suppress the worsening of the fuel economy.

According to the apparatus aspect of the present invention, said objective is solved by an exhaust purification apparatus for an internal combustion engine having the features of independent claim 1.

Preferred embodiments are laid down in the dependent claims.

According to a method aspect of the present invention, said objective is solved by an exhaust gas purification method for an internal combustion engine having the features of independent claim 32.

Hereinafter, the present invention is illustrated and explained by means of preferred embodiments in conjunction with the accompanying drawings. In the drawings, wherein:
Fig. 1 is a rough system configuration view of an internal combustion engine to which an exhaust purification apparatus according to the present teaching is applicable.
Fig. 2 is a characteristic graph representing a relationship between a hydrogen (H2) concentration and poisoning release performance with each catalyst temperature as a parameter.
Fig. 3 is a characteristic graph representing a relationship between a catalyst temperature and a poisoning release time duration.
Fig. 4A is a characteristic graph representing the ignition timing and Hydrogen (H₂) concentration.
Fig. 4B is a characteristic graph representing the ignition timing and Oxygen (O₂) concentration.
Fig. 5 is a characteristic graph representing a split ratio (an injection rate under compression stroke) and exhaust gas temperature.
Fig. 6 is a characteristic graph representing the spilt ratio and hydrogen (H₂) concentration.
Fig. 7 is a poisoning release control flowchart executed in a first preferred embodiment of the exhaust purification apparatus according to the present teaching.
Figs. 8A, 8B, 8C, 8D, 8E, 8F, and 8G are integrally a timing chart for explaining an operation of the poisoning release control executed in the first embodiment shown in Fig. 1 and Fig. 7.
Figs. 9A and 9B are integrally a timing chart for explaining an advantage of the exhaust purification apparatus in the first embodiment over a comparative example.
Fig. 10 is a poisoning release control flowchart executed in a second preferred embodiment of the exhaust purification apparatus according to the present teaching.
Figs. 11A, 11B, 11C, 11D, 11E, 11F, and 11G are integrally a timing chart for explaining an operation of the poisoning release control in the case of a second preferred embodiment of the exhaust purification apparatus according to the present teaching.
Fig. 12 is a poisoning release control flowchart executed in a third preferred embodiment of the exhaust purification apparatus according to the present teaching.
Figs. 13A, 13B, 13C, 13E, 13F, and 13G are integrally a timing chart for explaining an operation of the poisoning release control in the case of the third embodiment of the exhaust purification apparatus according to the present teaching.
Fig. 14 is a poisoning release control flowchart executed in a fourth preferred embodiment of the exhaust purification apparatus according to the present teaching.
Figs. 15A, 15B, 15C, 15D, 15E, 15F, and 15G are integrally a timing chart for explaining an operation of the poisoning release control executed in the fourth embodiment of the exhaust purification apparatus according to the present teaching.

Reference will hereinafter be made to the drawings in order to facilitate a better understanding of the present teaching.

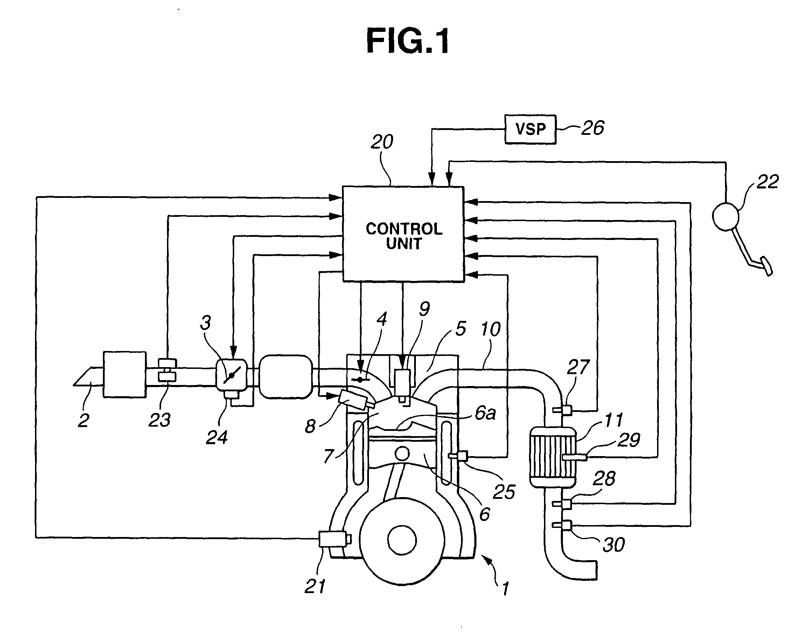

Fig. 1 shows a rough configuration view of an internal combustion engine to which an exhaust purification apparatus according to the present teaching is applicable. Engine denoted by 1 has an intake passage 2 in which a throttle valve 3 to control an intake air quantity is mounted. Throttle valve 3 is an electronically controlled throttle valve activated by means of an actuator such as an electric motor (DC motor). A drive signal from a control unit (or also referred to as a controller) 20 drives throttle valve 3 to be opened or closed. A swirl control valve (SCV) 4 is disposed at a downstream side from a manifold section branched to each cylinder. Another drive signal from control unit 20 drives swirl control valve 4 to be opened or closed. A fuel injector (or called, a fuel injection valve) 8 is exposed to a combustion chamber 7 of each cylinder of engine 1, the combustion chamber being defined by a cylinder head 5 and a piston 6. A crown surface of piston 6 is formed with a bowl portion (recess portion) 6a at a position eccentric thereon to an intake valve side. Fuel injector 8 is obliquely directed toward bowl portion 6a formed on the crown surface of piston 6 through the intake valve side. Fuel injector 8 has a solenoid to which a power is supplied in response to an injection pulse signal from control unit 20 so as to be opened. Thus, a predetermined amount of fuel whose fuel pressure is under a predetermined pressure is directly injected within combustion chamber 7. In a case where the fuel injection is carried out from fuel injector 8 under a suction stroke, the injected fuel is diffused into combustion chamber to form a homogeneous air-fuel mixture and is ignited and burned by means of a spark plug 9. Such a combustion as described above is called a homogenous combustion. With a combination of an air-fuel mixture ratio control, the homogeneous combustion is divided into a homogeneous stoichiometric combustion and a homogeneous lean combustion. In another case where the fuel injection is carried out under a compression stroke (especially, at a latter half portion of the stroke) from fuel injector 8, the injected fuel rides on a stream utilizing bowl portion 6a of piston crown surface to form a layer-like air-fuel mixture concentrated around spark plug 9 and is ignited and burned by means of spark plug 9. Such a combustion as described above is called a stratified combustion. Since, usually, an air-fuel ratio is extremely lean, this combustion is called a stratified lean combustion.

On the other hand, an NOx trap catalyst 11 is disposed in exhaust passage 10 as an exhaust (gas) purification catalyst. NOx trap catalyst 11 has a three-way catalyst function to perform an oxidization of CO and HC (hydro carbon) in the exhaust gas and a reduction of NOx when an exhaust air-fuel ratio is placed in the vicinity to a stoichiometric air-fuel mixture ratio to trap NOx in the exhaust gas when the exhaust air-fuel mixture ratio is lean, to trap NOx in the exhaust gas when the exhaust air-fuel ratio is lean, and to reduce and purify the trapped NOx when the exhaust air-fuel ratio indicates the stoichiometric air-fuel ratio or richer than the stoichiometric air-fuel ratio.

Various signals from various kinds of sensors are inputted to control unit 20 to perform a control over engine 1.

A crank angle sensor 21 generates a crank reference signal and a crank unit angle signal in synchronization with an engine revolution. Control unit 20 measures a period of the crank reference angular signal of crank angle sensor 21 or counts the crank unit angle signal for a constant period of time to detect an engine speed Ne. An accelerator pedal sensor 22 detects an accelerator pedal manipulated variable varied according to a depression depth by a vehicle driver. An airflow meter 23 is disposed at an upstream side of throttle valve 3 of intake passage 2 and is used to detect an intake air quantity Qa. A throttle sensor 24 detects an opening angle TVO of throttle valve 3. An idle switch is incorporated into throttle sensor 24 which is turned to ON when throttle valve 3 is completely closed. A coolant temperature sensor 25 is exposed to a water jacket of engine 1 to detect a coolant temperature Tw. A vehicular velocity sensor 26 detects a vehicular velocity VSP. An air-fuel ratio sensor 27 is disposed at an upstream side with respect to NOx trap catalyst 11 in exhaust passage 10. Air-fuel ratio sensor 27 serves to detect the air-fuel ratio of an intake air-fuel mixture or exhaust air-fuel mixture by detecting a concentration of oxygen (O₂) in the exhaust gas and is used in a feedback control of the air-fuel ratio. It is noted that another air-fuel ratio sensor 28 is disposed at a downstream side with respect to NOx trap catalyst 11. This downstream side air-fuel ratio sensor 28 corrects the air-fuel ratio feedback control based on the detected value of air-fuel ratio sensor 27 and is used to suppress a control error as a result of a deterioration of air-fuel ratio sensor 27. A catalyst temperature sensor 29 is disposed within an internal of NOx trap catalyst 11 to detect a catalyst temperature Tc. Catalyst temperature Tc is used to switch a mode in the poisoning release control of NOx trap catalyst 11 (as will be described later). However, catalyst temperature Tc may be estimated from an engine driving condition without any sensor.

An NOx concentration sensor 30 is disposed at the downstream side with respect to NOx trap catalyst 11 in exhaust passage 10 to detect NOx concentration in the exhaust gas. This NOx concentration sensor 30 is used to detect a poisoning state (a state wherein NOx trap ability is worsened due to a poisoning of sulfur or a state wherein NOx trap ability (capability) is recovered due to the poisoning release) but, without any sensor such as the sensor described above, the poisoning state may be estimated by another estimation technique.

Control unit 20 includes a microcomputer having a CPU (Central Processing Unit) , ROM (Read Only Memory), RAM (Random Access Memory), an A/D converter, an Input/output interface, and a common bus. Control unit 20 controls the opening angle of throttle valve 3, controls the open and closure of swirl control valve 4, sets and controls a fuel injection start timing and a fuel injection quantity through fuel injector 8, and controls an ignition timing of spark plug 9 at a set ignition timing in accordance with a driving condition detected on the basis of the signals from the above-described various sensors.

Then, the control of a combustion form is carried out in accordance with the driving condition. That is to say, at the time of a normal driving, the stratified lean combustion at a time of the fuel injection during the compression stroke under, for example, a low engine load region. On the other hand, under, for example, a high engine load region, either the homogeneous stoichiometric combustion due to an injection during the compression stroke or homogeneous lean combustion due to the injection during the suction stroke. NOx trap catalyst 11 traps NOx (for example, nitrogen oxide) in the exhaust gas when the exhaust air-fuel ratio indicates lean. Simultaneously, NOx trap catalyst 11 traps SOx (for example, sulfur oxide). The poisoning by SOx causes an NOx trap capability (including NOx reduction performance) to be reduced. Therefore, as a poisoning release control of SOx, the exhaust gas temperature is raised under a predetermined condition. Thus, the catalyst temperature is raised to the temperature needed to release the poisoning of SOx and this raised temperature is maintained for the predetermined period of time so that the poisoning of SOx can be released.

Specifically, the fuel injection is divided (split) into the injection under the suction stroke and that under the compression stroke so that a stratified air-fuel mixture which is relatively rich (A/F = about 10 through 16) is formed around spark plug 9 and a relatively lean (A/F = 19 to 24) stratified air-fuel mixture over the whole combustion chamber 7 enclosing spark plug 9 is formed. It is noted that a whole air-fuel mixture ratio (the whole combustion chamber) is controlled so as to provide the substantially stoichiometric air-fuel ratio. Such a combustion form as described above is also called a stratified stoichiometric combustion (a stratified stoichiometric combustion caused by such a split fuel injection) as described above.

The following items (1) through (4) describe concepts of the stratified stoichiometric combustion.
(1) Securing (Oxygen) O₂ required for an after burning by forming a lean air-fuel mixture in the vicinity to a wall surface of combustion chamber 7 caused by fuel injection during the suction stroke.
(2) The fuel injection at a time during the compression stroke causes a rich air-fuel mixture to be formed around spark plug 9 to improve an initial ignitability. Thus, a combustion stability can be improved.
(3) CO is generated according to the combustion of the lean air-fuel mixture in the vicinity to the wall surface of the combustion chamber and the after burning of the lean air-fuel mixture with O₂ is promoted so that a reduction of HC (hydro carbon) and a rise in exhaust temperature are achieved.
(4) The ignition timing can be retarded due to the improvement in the initial ignitability and the exhaust (gas) temperature rise due to the after burning effect caused by the retardation of ignition timing is furthermore be improved.

Hence, in the normal mode of the poisoning release control, the fuel injection is split into those during the suction stroke and during the compression stroke through a direct cylinder injection type fuel injector 8 and the ignition timing through spark plug 9 is set toward the retardation angle direction.

In the poisoning release control according to the present invention, in order to shorten a time it takes to release the poisoning and minimize the worsening of fuel consumption, an efficiency of the poisoning release before the catalyst temperature has reached to a temperature required to release the poisoning (a temperature at which the poisoning release performance becomes stable) is improved. In addition, in order to improve an exhaust gas temperature rise performance, an exhaust gas composition mode is set prior to the normal mode of the poisoning release control and, furthermore, an exhaust (gas) temperature rise mode is set before the exhaust (gas) composition mode. According to the catalyst temperature, the poisoning release control is executed in this order, viz., exhaust gas temperature rise mode → exhaust gas composition mode → normal mode.

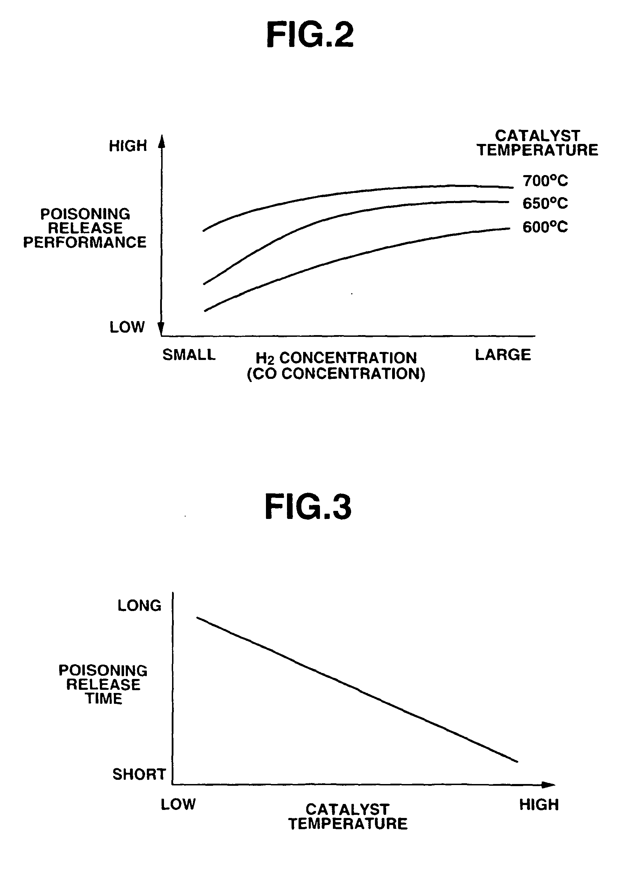

Prior to the details of the poisoning release control executed in the exhaust gas purification apparatus according to the present invention, characteristics (experimental results) of Figs. 2 through 6 on the basis of the poisoning release control according to the present invention will be described below. Fig. 2 shows characteristic graphs representing a relationship between H₂ concentration (CO concentration) in the exhaust gas and a poisoning release performance with respective catalyst temperatures as parameters. It will be appreciated that, as catalyst temperature Tc is raised, the poisoning release performance is improved. At a relatively low temperature (600°C) at which the poisoning release is started, the characteristic line is raised toward rightward direction (as the concentration of H₂ or CO becomes higher, the positioning release performance is raised gradually). At a relatively high temperature (650°C) at which the poisoning release is stably carried out at a relatively high temperature direction or at an upper temperature (700°C) than the temperature (650°C), as the characteristic line approaches to a horizontal line, H₂ (or CO) concentration becomes lower. Consequently, even if HC concentration (H₂ (or CO) concentration) becomes low,, it is indicated that a sufficient poisoning release function is obtained. Hence, it will be appreciated that a high concentration of the hydrogen (H₂) in the exhaust gas, with a range from 600°C to 650°C as the exhaust gas composition mode, is effective in the improvement in the poisoning release performance. It is noted that H₂ concentration in the exhaust gas is substantially in proportion to CO concentration and HC concentration. Fig. 3 shows a relationship between the catalyst temperature and a poisoning release time. As the catalyst temperature becomes higher, the poisoning release time can be shortened.

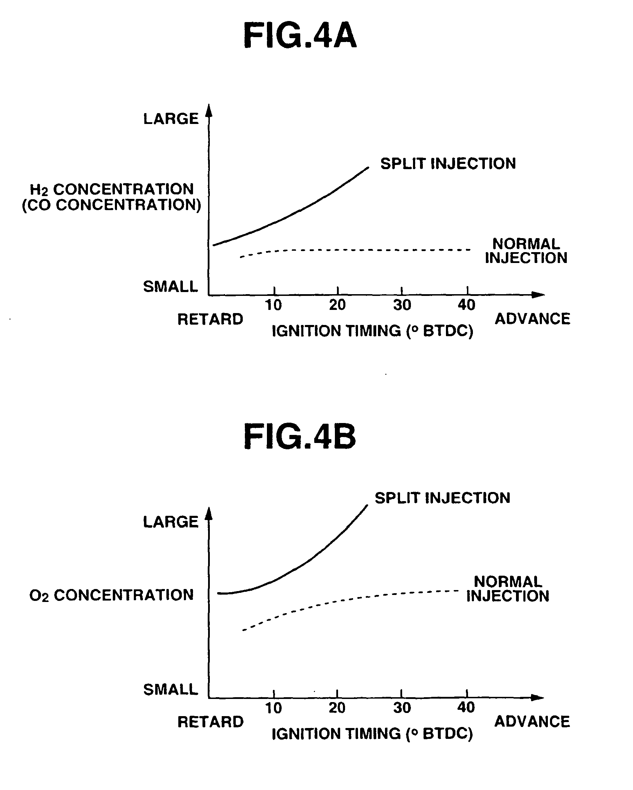

Fig. 4A shows a relationship between the ignition timing and H₂ concentration (CO concentration) and divided according to the fuel injection timing of normal injection (suction stroke injection) and split fuel injection (fuel injection during the suction stroke + fuel injection during compression stroke). Fig. 4B shows a relationship between the ignition timing and O₂ concentration in the exhaust gas according to the normal injection (suction stroke injection) and the split injection (suction stroke injection + compression stroke injection). In the case of the split injection, the advance of the ignition timing is carried out so that O₂ concentration in the exhaust gas can be increased.

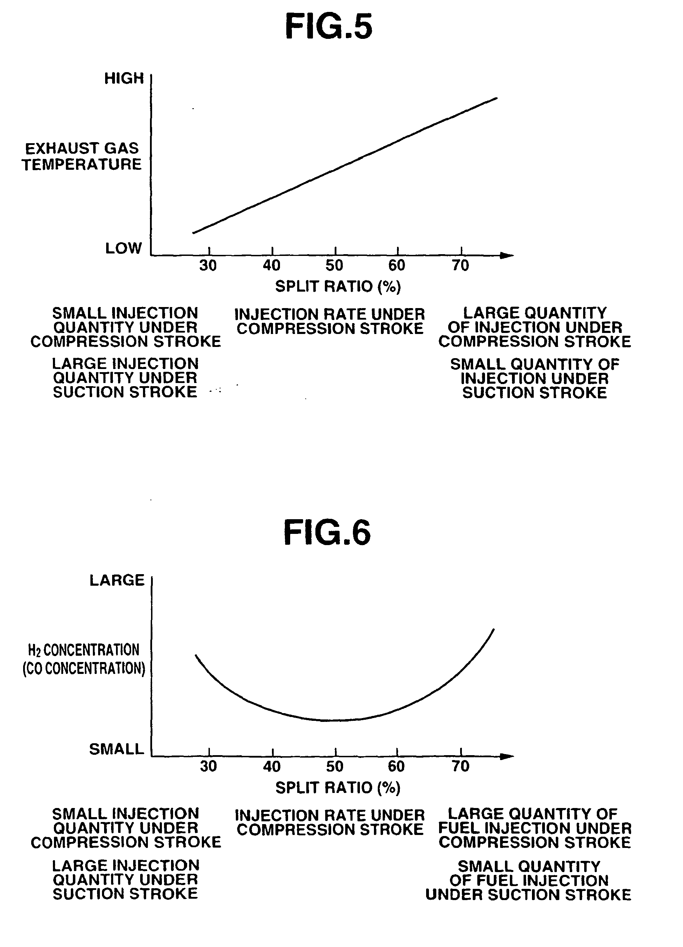

Fig. 5 shows a relationship between a split ratio (compression stroke injection rate) and exhaust (gas) temperature. As the rate of fuel injection under the compression stroke to a total fuel injection quantity for four strokes per cylinder becomes larger, the exhaust (gas) temperature is raised. Fig. 6 shows a relationship between a relationship between the split ratio (the above-described rate at which the fuel under the compression stroke is injected) and H₂ (hydrogen) concentration (CO (carbon monoxide) concentration) in the exhaust gas. When the rate of fuel injection quantity under the compression stroke is placed in the vicinity to 50 %, the concentration of H₂ becomes minimized. As the rate of fuel injection during the compression stroke becomes larger than 50 %, the H₂ concentration becomes increased.

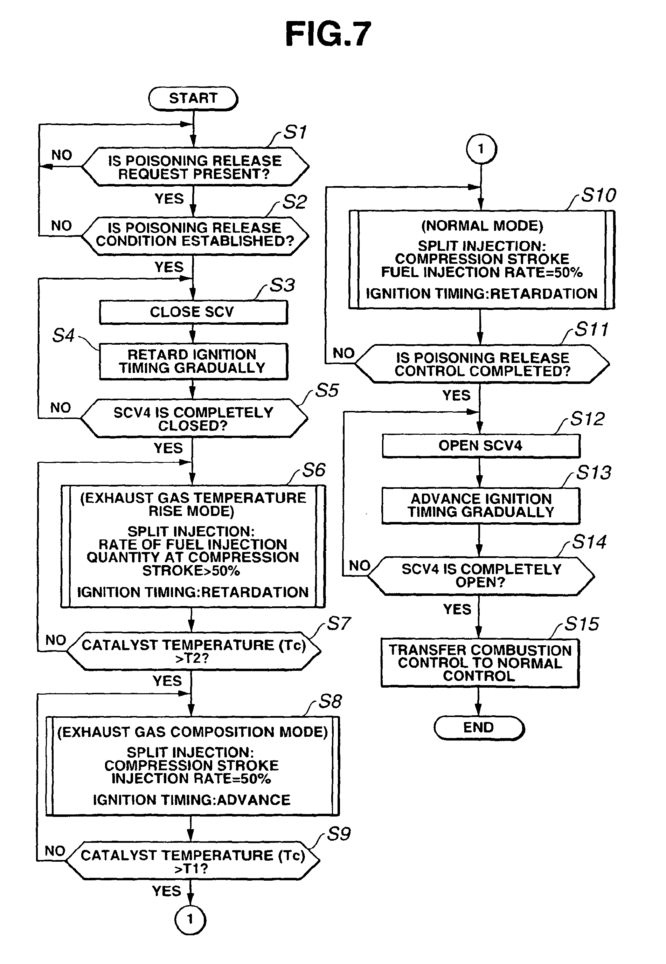

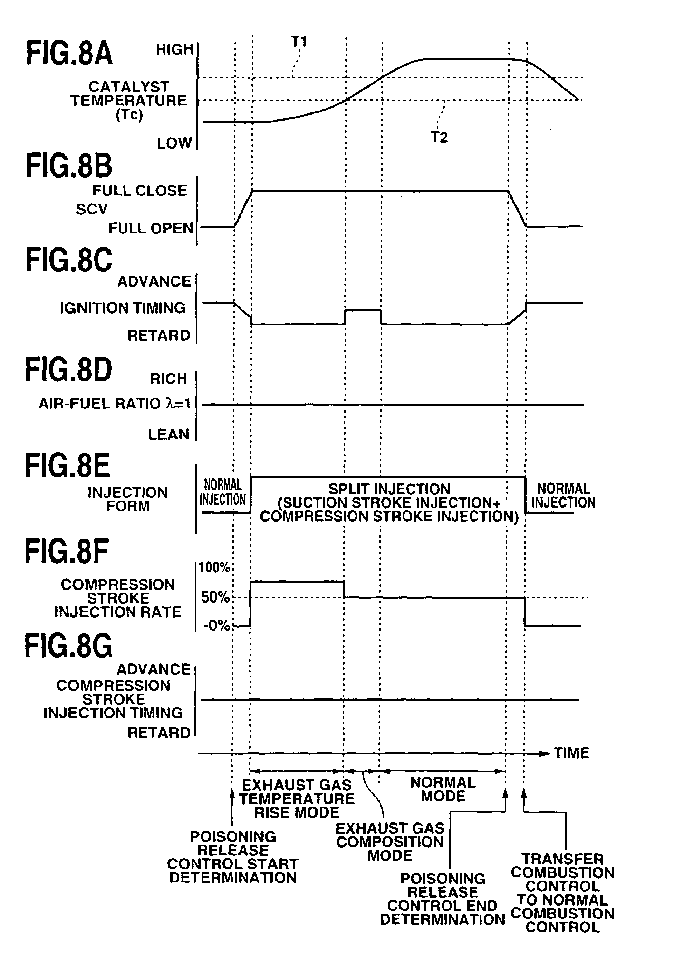

The poisoning release control executed in the first embodiment of the exhaust purification apparatus according to the present invention will be described with reference to a flowchart of Fig. 7 described in the first embodiment and an integrated timing chart of Figs. 8A through 8G.

At a step of S1, controller (control unit) 20 determines whether a demand on the positioning release is present. Specifically, controller 20 samples the intake air quantity Qa correlated to the exhaust gas flow quantity for each time unit, accumulates the sampled intake air quantities, and estimates an SOx poisoning quantity for NOx trap catalyst 11 on the basis of the accumulated value described above. If this estimated value of poisoning quantity of SOx for NOx trap catalyst 11 is compared with a predetermined estimated threshold value. If SOx accumulated quantity > threshold value, controller 20 determines that the poisoning demand is present. Or, if NOx concentration at the downstream side of NOx trap catalyst 11 is detected by means of NOx concentration at the downstream side of NOx trap catalyst 11 is detected. If controller 20 determines that NOx concentration is larger than its predetermined threshold value, controller 20 determines that the poisoning release demand is present. Or alternatively, if the concentration of NOx at the downstream side of NOx catalyst 11 by means of NOx concentration sensor 30 is larger than another predetermined threshold value, controller 20 determines that there is a poisoning release demand. It is noted that, other than OR condition, AND condition may be used to determine the demand presence on the poisoning release. If Yes at step S1, the routine goes to a step S2.

At step S2, controller 20 determines whether a predetermined release condition is established. The poisoning release condition is, for example, such that the present driving condition is the homogeneous stoichiometric combustion and the vehicle speed (vehicular velocity) VSP falls within a predetermined range (from a lower limit vehicular velocity to an upper limit vehicular velocity). If the poisoning release condition is established, the routine goes to a step S3. At step S3, prior to a start of the poisoning release control, swirl control valve (SCV) 4 is driven to the closed state. At a step S4, the ignition timing is gradually retarded from an MBT (Minimum Advance for Best Torque) ignition timing point. At a step S5, controller 20 determines whether swirl control valve 4 is controlled at a full (complete) close position. Then, at a step S5, controller 20 determines whether swirl control valve 4 is completely closed (a predetermined time has passed from a time at which a close command is issued). If Yes at a step S5, the routine goes to a step S6. At step S6, controller 20 executes the exhaust gas rise temperature mode as a first stage of the poisoning release control. In the exhaust gas temperature rise mode, while the whole air-fuel ratio is maintained at the stoichiometric air-fuel ratio (λ = 1), the fuel injection is split into the suction stroke injection and the compression stroke injection. In this addition, the rate of injection quantity of the injection under the compression stroke (split ratio) to the total fuel injection quantity for four strokes of the engine per cylinder is set to be larger than 50 %. For example, with 60 % through 70 %, compression stroke injection quantity is larger than (>) suction stroke injection quantity.

That is to say, as appreciated from Fig. 5, an improvement in temperature rise characteristic is made using the large split ratio to achieve a large exhaust gas temperature rise effect. The ignition timing is largely retarded. The rise in the exhaust (gas) temperature is carried out by this retardation of the ignition timing. It is noted that the ignition timing set at the retardation angle direction is more retarded than that during a normal homogeneous combustion. At a step S7, controller 20 determines whether catalyst temperature Tc detected by catalyst temperature sensor 29 is in excess of a second predetermined catalyst temperature T2 which is a temperature at which the poisoning release control is started (for example, 600°C). If not exceeded (No) at step S7, the exhaust temperature rise mode is continued at step S6. If the catalyst temperature Tc becomes high and is in excess of second predetermined value T2 (Yes), the routine goes to a step S8. At a step S8, the poisoning release control in exhaust gas composition mode is executed as a second stage of the poisoning release control. In the exhaust gas composition mode, while the whole air-fuel ratio is maintained at stoichiometric air-fuel ratio (λ = 1), the fuel injection is split into suction stroke injection and compression stroke injection and the rate of compression stroke injection quantity (split ratio) is 50 %. Compression stroke fuel injection quantity = suction stroke fuel injection quantity. Then, the ignition timing is largely advanced. That is to say, since the ignition timing is largely advanced, the concentration of H₂ in the exhaust gas is increased as appreciated from, Fig. 4A. Thus, as appreciated from Fig. 2, the poisoning release performance is improved. It is, however, noted that the ignition timing set at the advance angle direction is more retarded than the normal homogeneous combustion. At the next step S9, controller 20 determines whether catalytic temperature Tc is in excess of first predetermined value T1 at which the poisoning release performance becomes stable (for example, 650°C). If not exceeded (No) at step S9, the routine returns to step S8 to continue the exhaust gas composition mode. If the catalyst temperature Tc is increased and is in excess of first predetermined value T1 (Yes) at step S9, the routine goes to a step S10.

At step S10, as a third stage of the poisoning release control, the control of the normal mode is executed. In the normal mode, while the whole air-fuel ratio is maintained at the stoichiometric air-fuel ratio (λ = 1), the fuel injection is split into suction stroke fuel injection and compression stroke fuel injection and the rate of fuel injection quantity under the compression stroke (split ratio) which is 50 %. As appreciated from Fig. 2, this is because a sufficient poisoning release performance can be obtained even when H₂ concentration in the exhaust gas is reduced. It is of course that the ignition timing set at the retardation angle direction is further retarded than that set at the normal homogeneous combustion. At the next step S11, controller 20 determines whether the poisoning release has been completed. Specifically, during the poisoning release control, a predetermined poisoning release quantity is subtracted from the estimated value of NOx trap catalyst 11 on the basis of the accumulated value of intake air quantity Qa to estimate the remaining quantity of Sox poisoning release quantity for each unit time. If the estimated value of Sox poisoning quantity is compared with a predetermined lower limit side threshold value, controller 20 determines that the poisoning release control is completed when Sox accumulated quantity < threshold value (at step S11). In addition, when NOx concentration detected at the downstream side of the NOx trap catalyst 11 by means of NOx concentration sensor 30 is detected and is made smaller than a predetermined lower limit threshold value, controller 20 determines that the poisoning release control is completed. In this case, other than OR condition of both SOx accumulated quantity and NOx concentration at the downstream side of NOx trap catalyst 11, AND condition may be used to determine the completion of the poisoning release control.

If controller 20 does not determine that the poisoning release control is completed, the normal mode at step S10 is continued. If poisoning release completion is not determined, the routine goes to a step S12 to transfer the combustion control to the normal one. At step S12, controller 20 drives swirl control valve (SCV) 4 into the open direction prior to the transfer toward the normal combustion control. At a step S13, controller 20 gradually advances the ignition timing toward MBT ignition timing point. At a step S14, controller 20 determines whether SCV 4 is controlled to be completely opened whether a predetermined period of time has passed from a time at which the open command is issued. If Yes at step S14, the routine goes to a step S15. At step S15, controller 20 transfers the combustion control to the normal combustion control (homogeneous stoichiometric combustion). That is to say, upon the completion of the split injection, the fuel injection pattern is returned to the normal injection (normally, during the suction stroke) and the ignition timing is controlled at the target of MBT point ignition timing. It is noted that, if, during the poisoning release control, the poisoning release control is suspended when a combustion control demand having a high priority occurs, the poisoning release command is suspended so that the control transfers to the combustion control which meets the demand. Next, a further detail of each mode (exhaust gas temperature rise mode, exhaust gas composition mode, and normal mode) in the poisoning release control will be described below.

### (Exhaust (gas) temperature rise mode)

Next, a further detail of each mode (exhaust gas temperature rise mode, exhaust gas compression mode, and the normal mode) in the poisoning release control will be described below. Together with a start of the poisoning release control (provided after SCV 4 is completely closed), the executions of the split injection and the ignition timing retardation in the same way as the normal mode start the control in exhaust gas temperature rise mode in temperature to a temperature at which the catalyst temperature rise to a temperature at which SOx poisoning release is started. A point which is different from the normal mode is the setting of the rate of fuel injection quantity under the compression stroke at any value of percentage larger (60 % to 70 %) than the case of the normal mode (about 50 %).

A characteristic of exhaust gas temperature caused by the split injection is such that as the split ratio becomes larger, that is to say, as the rate of compression stroke injection quantity becomes larger, the exhaust gas temperature tends to become raised, as viewed from the relationship between the split ratio (the rate of injection quantity under the compression stroke) and exhaust gas temperature in Fig. 5. This is because, as the injection quantity under compression stroke is increased, an uncombusted fuel is present in the vicinity to spark plug 9 to develop CO and HC and the lean air-fuel mixture is formed in the neighborhood of the cylinder wall surface. During an initial combustion interval immediately after the ignition of fuel, a part of space in combustion chamber 7 surrounding spark plug 9 is excessively and locally rich. Hence, a moderate combustion whose flame propagation speed is slow in resulted. Furthermore, during a combustion interval from a middle period to a final period, the air-fuel mixture becomes lean in the vicinity to the cylinder wall surface. This results in a further moderate combustion. Due to an extension of the final combustion interval, CO and HC developed around spark plug 9 gradually reacts with O₂ present in the vicinity to the cylinder wall surface during the combustion. Thus, the after burning is promoted. Hence, the exhaust gas temperature rise mode having a large compression stroke injection quantity rate permits a quick rise in the exhaust gas temperature and a rise in the catalyst temperature Tc. Consequently, the poisoning release time can be shortened.

### [Exhaust Gas Composition Mode]

After catalyst temperature Tc has reached to the temperature (second predetermined value T2, for example, 600°C), the control is transferred to the exhaust gas composition mode in which H₂ (hydrogen) concentration of the exhaust gas composition after the combustion is increased to change the exhaust gas composition to improve the poisoning release efficiency. In the exhaust gas composition mode, the split injection is carried out in the same manner as the normal mode and exhaust gas temperature rise mode. The difference point from the normal mode and from the exhaust gas temperature rise mode is as follows: That is to say, the ignition timing is set toward the advance angle direction. It is noted that the split ratio (rate of injection quantity during the compression stroke) is set to the same as that in the normal mode (about 50 %) and is decreased as against the exhaust gas temperature rise mode. It will be appreciated from Figs. 2 and 3 that immediately after catalyst temperature Tc has reached to the temperature at which the poisoning release control is started, a sufficient poisoning release quantity cannot be obtained due to the low catalyst temperature for the poisoning release efficiency. In addition, as a factor of improving the poisoning release efficiency under a low temperature condition, H₂ required to reduce SOx and CO and HC are practically increased in the combustion process. Thus, the poisoning release quantity needs to be increased. Furthermore, it will be appreciated that the poisoning release performance is furthermore improved due to the presence of O₂ during the reduction of SOx. Then, the control is carried out to achieve the sufficient poisoning release quantity even under the low catalyst temperature. As far as the actual exhaust gas characteristic is concerned, Figs. 4A and 4B shows relationships between the ignition timing in the case of the split injection and H₂ concentration (O₂ concentration). It will be appreciated from Figs. 4A and 4B that H₂ concentration (CO concentration) and O₂ concentration can be doubled or more by advancing the ignition timing toward, for example, 25°BTDC (Before Top Dead Center) with respect to a retardation angle direction (10°BTDC) of the ignition timing. Hence, in the exhaust gas temperature rise mode demanding a rapid rise in temperature, the ignition timing is set toward the retardation angle direction. However, in the exhaust gas composition mode requiring the improvement in the poisoning release efficiency to start the rapid temperature rise, the ignition timing is set toward the advance angle direction. This can achieve the exhaust gas composition which improves a poisoning release efficiency in order to improve the poisoning release control efficiency during the temperature rise process of the exhaust gas. In addition, the supply of O₂ promotes the oxidization reaction. The promotion of oxidization reaction causes a reduction in the exhaust gas temperature rise characteristic to be compensated for the reduction in the exhaust gas capacity along with the advance angle of the ignition timing angle. The temperature rise characteristic is not worsened. A combustion efficiency will be described in a case of the split injection. If the ignition timing is retarded, the ignition is delayed so that a thermal generation rate is reduced and a reduction of a total thermal generation quantity occurs. In order to obtain the same development torque, the air quantity is increased with respect to the setting of advance angle of ignition timing (in actual manner of fact, the opening angle of the throttle valve is increased). A total fuel injection quantity is accordingly increased. Thus, an exhaust capacity after the combustion is increased. Hence, the setting of the ignition timing retardation in the case of the split injection cannot avoid the worsening of fuel consumption. In the exhaust gas temperature rise mode, it cannot help neglecting the worsening of fuel consumption due to the setting of the ignition timing advance angle toward the retardation angle direction. Since the exhaust gas temperature rise is a main object in the exhaust gas temperature rise mode. In this respect, in the exhaust gas composition mode, the ignition timing may be set to the advance angle so that the fuel consumption may be improved. In addition, in the exhaust gas composition mode, the reduction in the split ratio (injection quantity during the compression stroke) as against the exhaust gas temperature rise mode is a good practice in terms of a relief of the worsening of the fuel consumption.

### [Normal Mode]

After catalyst temperature Tc has reached to the predetermined temperature (first predetermined temperature (first predetermined value of T1), for example, 650°C), the control is transferred to that of the normal mode to maintain the catalyst temperature. In the normal mode, the split injection is carried out in the same manner as the exhaust gas temperature rise mode and the exhaust gas composition mode. The difference point from the exhaust gas composition mode is the setting of ignition timing toward the retardation angle direction in the same way as the exhaust gas temperature rise mode. This temperature range is a region in which the poisoning release performance hardly receives an influence on the exhaust gas composition, as shown in Fig. 2, and in which the poisoning release performance is predominated by a temperature, as shown in Fig. 2. Hence, it is important to hold catalyst temperature Tc since the poisoning release performance becomes worse. Since no rapid temperature rise is requested (demanded), the split ratio (fuel injection quantity under compression stroke) for the exhaust gas temperature rise mode is decreased so that the worsening of the fuel consumption can be relieved and, on the other hand, the ignition timing is set again toward the retardation angle direction. However, since no temperature rise demand is present more than necessity, it becomes unnecessary to use the set value of the split ratio such that an extreme worsening of fuel economy is present. However, if the worsening of the fuel economy is relieved due to the fuel injection during the compression stroke, there is a possibility that the exhaust gas temperature is reduced. Hence, the injection timing is set toward the retardation angle direction but not toward the advance angle direction so that an exhaust capacity is increased and is maintained without a reduction in catalyst temperature Tc.

These series of control modes are executed in a well-balanced manner so that it becomes possible to carry out the poisoning release control with the poisoning release efficiency taken into account. Finally, the poisoning release control can be executed in a minimum necessary time limit. The worsening of the fuel consumption can be suppressed at minimum.

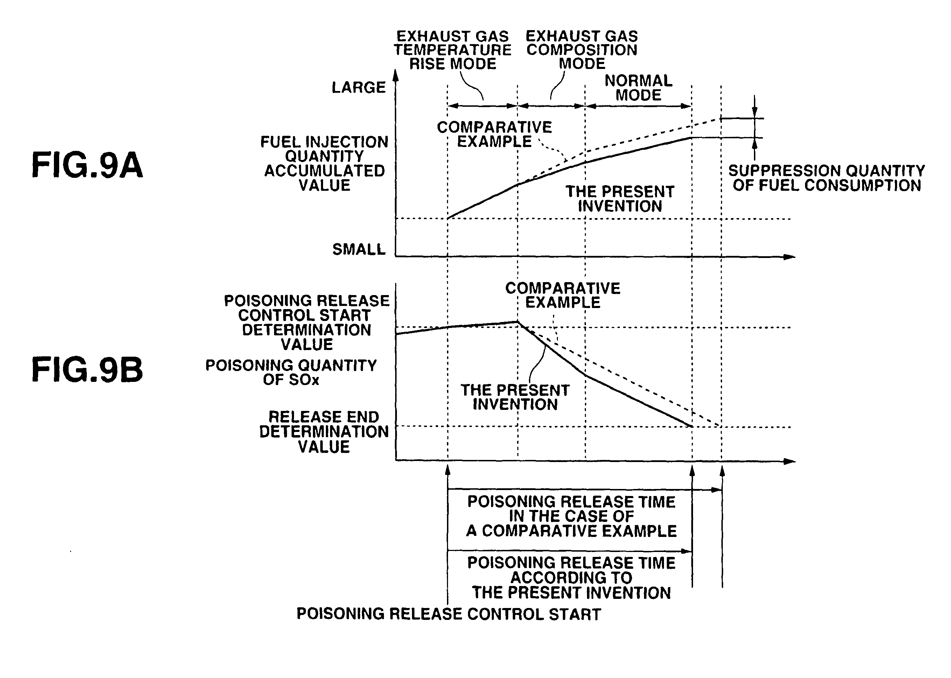

Figs. 9A and 9B show that the above-described poisoning release control in the case of the first embodiment can suppress the worsening of fuel consumption while the poisoning release time can be shortened, as compared with a comparative example denoted by broken lines of Figs. 9A and 9B. It is noted that, in the comparative example, the ignition timing is not set toward the advance angle direction during the interval of the exhaust gas composition mode but is set toward the retardation angle direction. That is to say, in the case of the first embodiment, during the exhaust gas composition mode, the ignition timing is advanced to increaset H₂ component in the exhaust gas so that SOx release quantity during this mode can be increased and, accordingly, the poisoning release time can be shortened. During the exhaust gas composition mode, the ignition timing is advanced to improve the engine output performance. Especially, a torque reduction (a torque hesitation) during a high engine load region is not present. The fuel injection quantity to obtain the same output torque can be reduced. Accordingly, the poisoning release time can be shortened and the worsening of the fuel economy can be suppressed.

According to the first embodiment of the exhaust purification apparatus, the poisoning release control is carried out including the normal mode and exhaust gas composition mode before the normal mode. In the exhaust gas composition mode, a manipulation parameter (or called, a driving parameter) of an engine related to the exhaust gas composition is manipulated so that H₂ concentration in the exhaust gas is higher than that in the normal mode. Thus, before and after the catalyst temperature reaches to the temperature required for the poisoning release, optimum exhaust gas compositions therebefore and thereafter are formed. Thus, an increase in the efficiency of the poisoning release causes the shortening of the poisoning release time so that the worsening of the fuel economy can be suppressed to a minimum. In this embodiment, when the exhaust gas composition mode is switched to the normal mode when catalyst temperature Tc is in excess of first predetermined value T1, the difference in the demand in accordance with catalyst temperature Tc can be coped with according to the present invention. In addition, an optimum mode transition from the exhaust gas composition mode to the normal mode can be achieved by setting first predetermined value T1 to the temperature at which the poisoning release performance is stable.

In addition, according to the exhaust purification apparatus in the first embodiment, the ignition timing in the exhaust gas composition mode is set toward more advance angle direction than that in the normal mode. Thus, H₂ concentration in the exhaust gas is increased so that the poisoning release performance can remarkably be improved.

In addition, according to the first preferred embodiment of the exhaust purification apparatus, during the poisoning release control, the fuel injection through a direct-ignited fuel injection valve (fuel injector 8) is split into the suction stroke injection and compression stroke injection so that the exhaust gas temperature can be raised to the temperature required for the poisoning release quickly. In addition, the whole air-fuel ratio in the split injection indicates substantially stoichiometric air-fuel ratio. Thus, the worsening of fuel consumption can be suppressed. In addition, in the first embodiment, the poisoning release control is executed in such a way that the poisoning release control further includes the exhaust gas temperature rise mode before the exhaust gas composition mode. In the exhaust gas temperature rise mode, the rate of fuel injection quantity is made larger than the normal mode (and exhaust gas composition mode) so that the temperature rise efficiency in the exhaust gas temperature rise mode can be improved. In addition, the rate of compression stroke injection in the exhaust gas temperature rise mode is larger than the exhaust gas composition mode which is made smaller than the exhaust gas composition mode. Consequently, the worsening of the fuel consumption in the exhaust gas composition mode can be suppressed.

In addition, in the first embodiment of the exhaust purification apparatus according to the present invention, the ignition timing in the exhaust gas temperature rise mode is set to the retardation angle direction than the exhaust gas composition mode so that the temperature rise performance in the exhaust gas temperature rise mode can be improved. In the preferred embodiment, the mode is switched from the exhaust gas temperature rise mode to the exhaust gas composition mode when catalyst temperature Tc is in excess of second predetermined value T2. Thus, the exhaust purification apparatus can cope with the difference in demand. In addition, since the second predetermined value is set to a temperature at which the poisoning release is started so that the optimum mode switching can be achieved.

According to the first embodiment of the exhaust purification apparatus, in the split injection in the exhaust gas temperature rise mode, the fuel injection quantity under compression stroke ≒ suction stroke fuel injection quantity. Consequently, the worsening of the fuel consumption can be suppressed.

In addition, in the first embodiment of the exhaust purification apparatus according to the present invention, the rate of injection under the compression stroke in the exhaust gas composition mode is smaller than that in the exhaust gas temperature rise mode and the ignition timing in the exhaust gas composition mode is more advanced than that in the exhaust gas temperature rise mode. Or, the rate of injection under the compression stroke in the exhaust gas composition mode is substantially equal to the normal mode and the ignition timing in the exhaust gas composition mode is more advanced than that in the normal mode. Thus, while suppressing the worsening of the fuel consumption in the exhaust gas composition mode, the poisoning release performance can be improved.

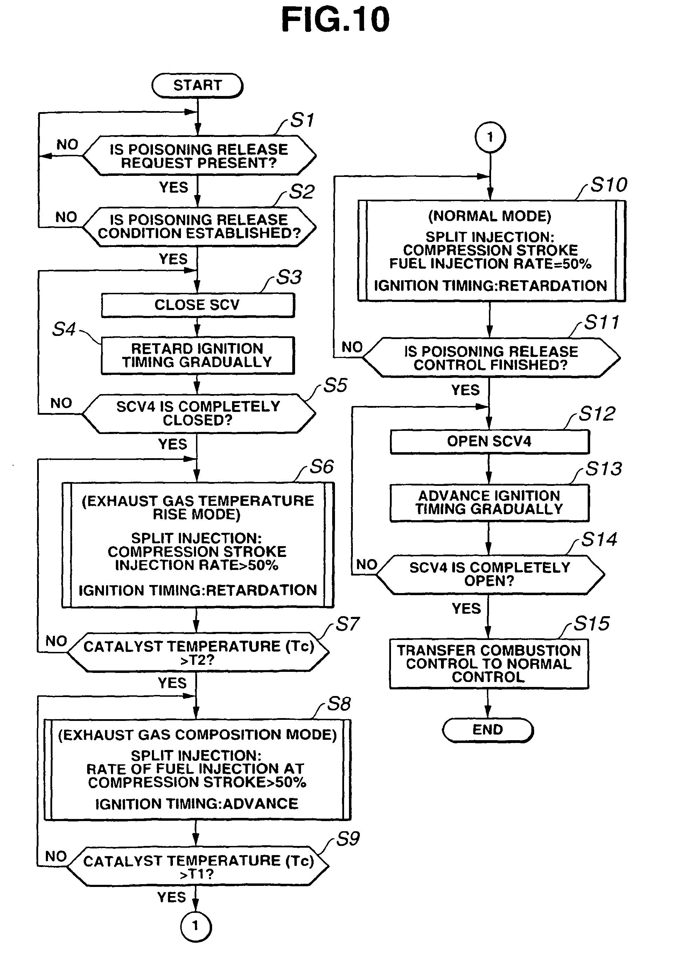

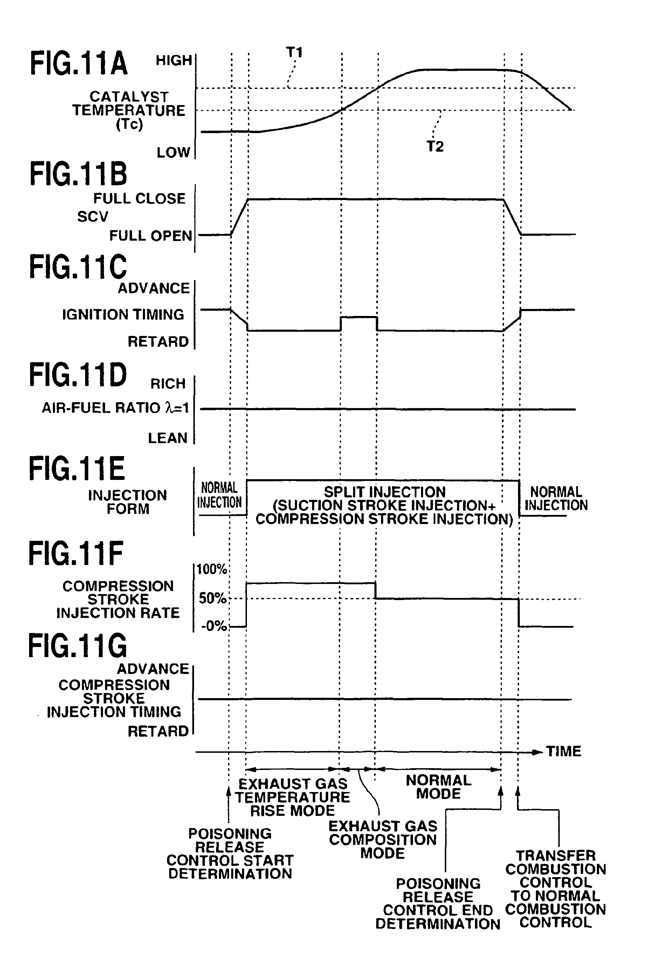

The poisoning release control executed in a second preferred embodiment of the exhaust purification apparatus according to the present invention will be described with reference to a flowchart in Fig. 10 and with reference to an integrated timing chart in Figs. 11A through 11G. The structure of the exhaust purification apparatus in the second embodiment is generally the same as described in the first embodiment. Thus, a difference point from the first embodiment will only be described below. These can be applied equally well to third and fourth preferred embodiments which will be described later.

In the exhaust gas composition mode of step S8 in the second embodiment (refer to Fig. 10), the fuel injection is split into the injection under the suction stroke and that under the compression stroke and the split ratio (the rate of injection under the compression stroke) is set to be larger than 50 %, for example, set to 60 % through 70 % with fuel injection quantity under the compression stroke > fuel injection quantity under suction stroke. Then, the ignition timing is largely advanced. That is to say, in the second embodiment, the rate of injection quantity under the compression stroke is set to be large in the exhaust gas composition mode in the same manner as the exhaust gas temperature rise mode. Thus, H₂ concentration in the exhaust gas is augmented as shown in Fig. 6. The setting of the advance angle of the ignition timing causes the increase in H₂ concentration (refer to Figs. 4A and 4B). The more increase in H₂ concentration aims at the further improvement in the poisoning release performance (refer to Fig. 2). In the second embodiment, the rate of injection quantity under the compression stroke in the exhaust gas composition mode is larger than the normal mode in the same way as the exhaust gas temperature rise mode. Thus, an increase effect of H₂ concentration in the exhaust gas composition mode is further increased and a more improvement in the poisoning release performance can be achieved.

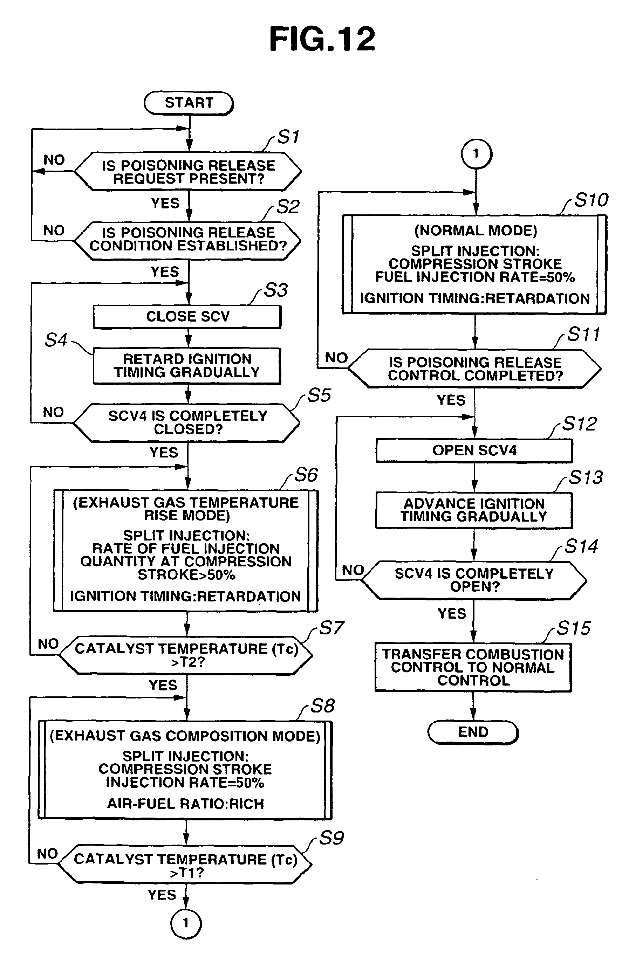

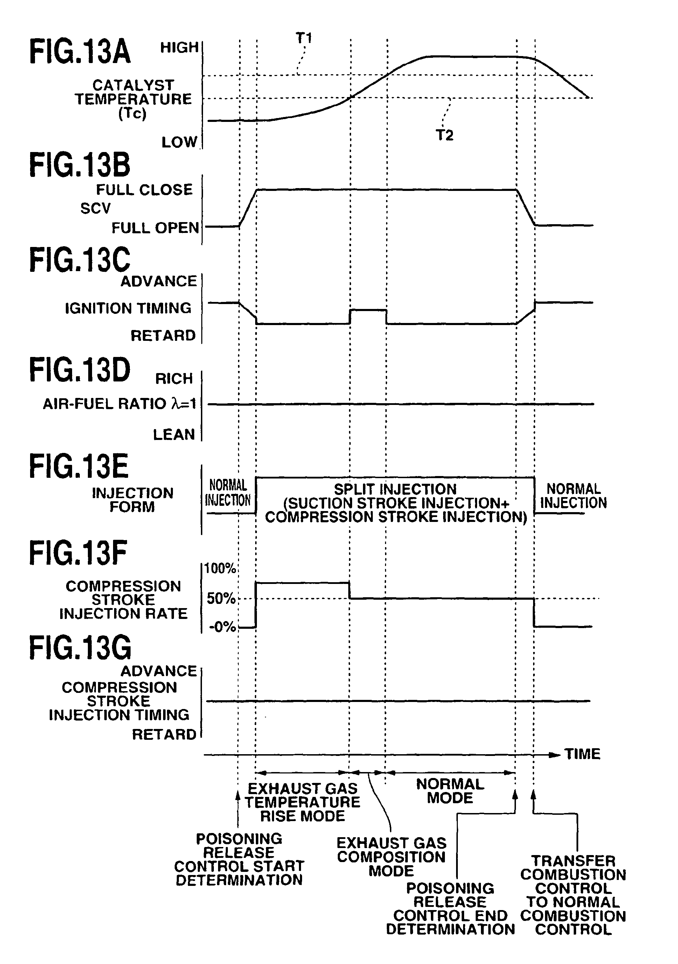

Next, the poisoning release control executed in the third preferred embodiment of the exhaust purification apparatus will be described with reference to the flowchart shown in Fig. 12 and timing charts shown in Figs. 13A through 13G. In the third embodiment, only the control in the exhaust gas composition mode at step S8 is different from that described in the first embodiment. At the exhaust gas composition mode of step S8 described in the third embodiment (refer to Fig. 12), the whole air-fuel ratio is enriched (λ > 1), the fuel injection is split into the injection under suction stroke and that under the compression stroke, and the split ratio (the rate of injection quantity under the compression stroke) is set to 50 %. This means that the fuel injection quantity under the compression stroke is equal to that under the suction stroke. Then, the ignition timing is largely advanced. That is to say, in the third embodiment of the exhaust purification apparatus, in the exhaust gas composition mode, together with the setting of the advance angle of the ignition timing, the air-fuel ratio is enriched. Together with the increase in CO in the exhaust gas, H₂ concentration is increased so that a further improvement in the poisoning release performance can be carried out. In the third embodiment, the whole air-fuel ratio in the exhaust gas composition mode is enriched than the normal mode or than the exhaust gas temperature rise mode. An increase effect in the H₂ concentration in the exhaust gas composition mode is made higher to improve the furthermore poisoning release performance.

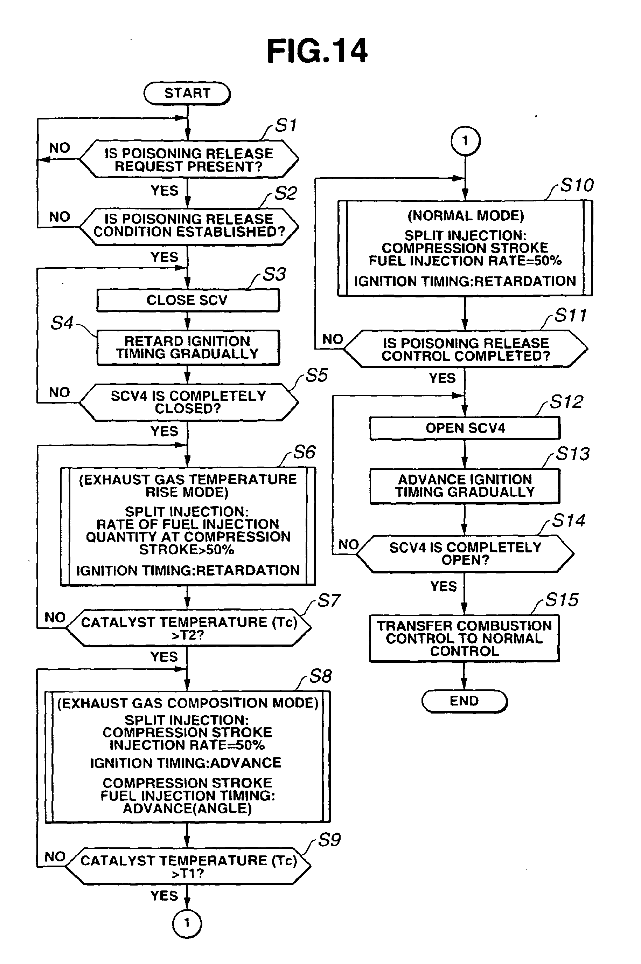

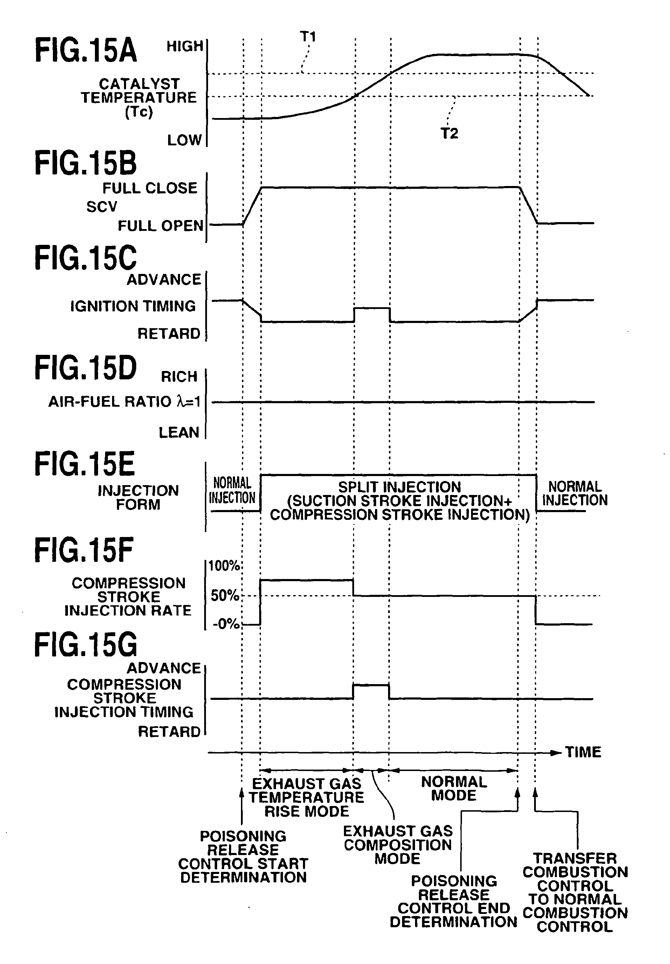

Next, Figs. 14 and 15A through 15G show the operational flowchart to which the poisoning release control executed in the fourth preferred embodiment of the exhaust purification apparatus according to the present invention and its timing charts in the fourth embodiment. The fourth embodiment is different from the first embodiment in only the control in the exhaust gas composition mode at step S8 of Fig. 14. In the fourth embodiment (refer to Fig. 14), at step S8 of the exhaust gas composition mode, while the whole air-fuel ratio is maintained at the stoichiometric air-fuel ratio (λ = 1), the fuel injection is split into the suction stroke injection and the compression stroke injection and the split ratio (the rate of injection quantity under the compression stroke) is 50 %. Thus, the injection quantity under the compression stroke is equal to that under the suction stroke. Then, the ignition timing is set largely toward the advance angle. In addition, the fuel injection timing under the compression stroke is set toward the advance angle direction. In the fourth embodiment, in the exhaust gas composition mode, the ignition timing is set toward the more advance angle direction and the fuel injection start timing under the compression stroke is set toward the advance angle direction. Together with the increase in CO in the exhaust gas, hydrogen (H₂) concentration is increased. Thus, the further improvement in the poisoning release performance can be made. According to the fourth embodiment of the exhaust purification apparatus, the fuel injection timing started under the compression stroke is set in the exhaust gas composition mode toward the more advance angle direction than the exhaust gas temperature rise mode and than the normal mode. The increase effect of H₂ concentration in the exhaust gas composition mode is increased. Thus, the further improvement in the poisoning release performance can be made. According to the fourth embodiment of the exhaust purification apparatus according to the present teaching, the fuel injection timing under the compression stroke is set toward the more advance angle direction than the exhaust gas temperature rise mode and than the normal mode. The increase effect of H₂ concentration in the exhaust gas composition mode is remarkably improved and the further improvement in the poisoning release performance can be carried out. It is noted that the term of exhaust has the same meaning of the term of exhaust gas in this specification.

## Claims

1. An exhaust purification apparatus for an internal combustion engine, comprising:
an exhaust gas purification catalyst (11) disposed in an exhaust passage (10) of the engine (1); and
a controller (20) that executes a SOx-poisoning release control of the exhaust gas purification catalyst when a predetermined condition is established, **characterized in that**
said SOx-poisoning release control comprises an exhaust gas temperature rise mode, an exhaust gas composition mode and a catalyst temperature maintaining mode, wherein an ignition timing in the exhaust gas composition mode being set toward a more advance angle direction than that in the exhaust gas temperature rise mode and the catalyst temperature maintaining mode, and a manipulation parameter of the engine related to an exhaust gas composition being manipulated in such a manner that a hydrogen concentration in the exhaust gas in the exhaust gas composition mode is higher than that in the catalyst temperature maintaining mode.

2. An exhaust purification apparatus for an internal combustion engine according to claim 1, **characterized in that** the mode of the SOx-poisoning release control is switched from the exhaust gas composition mode to the normal mode when a temperature (Tc) of the exhaust gas purification catalyst becomes high and is in excess of a first predetermined value (T1).

3. An exhaust purification apparatus for an internal combustion engine according to claim 2, **characterized in that** the first predetermined value (T1) is set to a temperature at which a SOx-poisoning release performance becomes stable.

4. An exhaust purification apparatus for an internal combustion engine according to claim any one of the preceding claims 1 to 3, **characterized in that**, in the exhaust composition mode, an ignition timing is set toward an advance angle direction more than that in the normal mode.

5. An exhaust purification apparatus for an internal combustion engine according to any one of the preceding claims 1 through 4, **characterized in that**, the SOx-poisoning release control further includes an exhaust gas temperature rise mode before the exhaust gas composition mode and, in the exhaust gas temperature rise mode, a rate of a fuel injection quantity under the compression stroke to a total fuel injection quantity for four strokes of the engine per cylinder is larger than the same in the normal mode.

6. An exhaust purification apparatus for an internal combustion engine according to any one of the preceding claims 1 through 4, **characterized in that** the SOx-poisoning release control further includes an exhaust gas temperature rise mode before the exhaust gas composition mode and, in the exhaust gas temperature rise mode, a rate of fuel injection quantity under the compression stroke to a total fuel injection quantity for four strokes of the engine is larger than the same in the exhaust gas composition mode.

7. An exhaust purification apparatus for an internal combustion engine according to any one of the preceding claims 1 through 4, **characterized in that** the SOx-poisoning release control further includes an exhaust gas temperature rise mode before the exhaust gas composition mode and, in the exhaust gas temperature rise mode, a rate of a fuel injection quantity under the compression stroke to a total fuel injection quantity for four strokes of the engine per cylinder is larger than the same in the exhaust gas composition mode and the same in the normal mode.

8. An exhaust purification apparatus for an internal combustion engine according to any one of the preceding claims 1 to 7, **characterized in that** the SOx-poisoning release control further includes an exhaust gas temperature rise mode before the exhaust gas composition mode and, in the exhaust gas temperature rise mode, an ignition timing is set toward a more retardation angle direction than that in the exhaust gas composition mode.

9. An exhaust purification apparatus for an internal combustion engine according to any one of the preceding claims 5 to 8, **characterized in that**, when the temperature (Tc) of the catalyst becomes high and is in excess of a second predetermined value (T2), the mode is switched from the exhaust gas temperature rise mode to the exhaust gas composition mode.

10. An exhaust purification apparatus for an internal combustion engine according to claim 9, **characterized in that** the second predetermined value (T2) is a temperature at which the SOx-poisoning release control is started.

11. An exhaust purification apparatus for an internal combustion engine according to any one of the preceding claims 5 to 10, **characterized in that** the fuel injection quantity is split into the fuel injection quantity under the compression stroke and that under the suction stroke and the fuel injection quantity under the compression stroke is larger than that under the suction stroke in the exhaust gas temperature rise mode.

12. An exhaust purification apparatus for an internal combustion engine according to any one of the preceding claims 5 to 11, **characterized in that** the fuel injection quantity is split into the fuel injection quantity under the compression stroke and that under the suction stroke and, in the exhaust gas composition mode, the fuel injection quantity under the compression stroke is substantially equal to that under the suction stroke.

13. An exhaust purification apparatus for an internal combustion engine according to any one of the preceding claims 5 to 12, **characterized in that** the fuel injection quantity is split into the fuel injection quantity under the compression stroke and that under the suction stroke and, in the normal mode, the fuel injection quantity under the compression stroke is substantially equal to that under the suction stroke.

14. An exhaust purification apparatus for an internal combustion engine according to any one of the preceding claims 5 to 13, **characterized in that** a rate of a fuel injection quantity under the compression stroke to a total fuel injection quantity for four strokes of the engine per cylinder in the exhaust gas composition mode is smaller than that in the exhaust temperature rise mode and an ignition timing in the exhaust gas composition mode is more advanced toward an advance angle direction than that in the exhaust temperature rise mode.

15. An exhaust purification apparatus for an internal combustion engine according to any one of the preceding claims 5 to 14, **characterized in that** a rate of a fuel injection quantity during the compression stroke to a total fuel injection quantity for the four strokes of the engine per cylinder in the exhaust gas composition mode is substantially equal to that in the normal mode and an ignition timing in the exhaust gas composition mode is more advanced toward the advance angle side than that in the normal mode.

16. An exhaust purification apparatus for an internal combustion engine according to claim 1, **characterized in that** the mode is switched from the exhaust gas composition mode to the normal mode, when a temperature (Tc) of the catalyst becomes high and is in excess of a first predetermined value (T1).

17. An exhaust purification apparatus for an internal combustion engine according to either claim 1 or 16, **characterized in that** the SOx-poisoning release control further includes an exhaust gas temperature rise mode before the exhaust gas composition mode and, in the exhaust temperature rise mode, the ignition timing is set toward a more retardation angle direction than that in the exhaust gas composition mode.

18. An exhaust purification apparatus for an internal combustion engine according to claim 17, **characterized in that**, a rate of a fuel injection quantity under the compression stroke to a total fuel injection quantity for four strokes of the engine per cylinder in the exhaust gas temperature rise mode is larger than that in the exhaust gas composition mode.

19. An exhaust purification apparatus for an internal combustion engine according to claim 17, **characterized in that**, a rate of a fuel injection quantity under the compression stroke to a total fuel injection quantity for four strokes of the engine per cylinder in the exhaust gas temperature rise mode is larger than that in the normal mode.

20. An exhaust purification apparatus for an internal combustion engine according to claim 17, **characterized in that** a rate of a fuel injection quantity under the compression stroke for four strokes of the engine per cylinder in the exhaust gas temperature rise mode is larger than that in the exhaust gas composition mode and that in the normal mode.

21. An exhaust purification apparatus for an internal combustion engine according to any one of the preceding claims 17 to 20, **characterized in that** the mode is switched from the exhaust gas temperature rise mode to the exhaust gas composition mode when a temperature (Tc) of the catalyst becomes high and is in excess of a second predetermined value (T2).

22. An exhaust purification apparatus for an internal combustion engine according to any one of the preceding claims 17 to 21, **characterized in that** the ignition timing in the exhaust gas temperature rise mode is set toward a more retardation angle direction than that during a normal homogeneous combustion.

23. An exhaust purification apparatus for an internal combustion engine according to any one of the preceding claims 17 to 22, **characterized in that** the ignition timing in the exhaust gas composition mode is set toward a more retardation angle direction than that during a normal homogeneous combustion.

24. An exhaust purification apparatus for an internal combustion engine according to any one of the preceding claims 17 to 23, **characterized in that** the ignition timing in the normal mode is set toward a more retardation angle direction than that during a normal homogeneous combustion.

25. An exhaust purification apparatus for an internal combustion engine according to any one of the preceding claims 1 to 24, **characterized in that** a whole air-fuel ratio during the SOx-poisoning release control is approximately a stoichiometric air-fuel ratio (λ = 1).

26. An exhaust purification apparatus for an internal combustion engine according to either claim 1 or 5, **characterized in that** the rate of the fuel injection quantity under the compression stroke in the exhaust gas composition mode is larger than that in the normal mode.

27. An exhaust purification apparatus for an internal combustion engine according to claim 5, **characterized in that** each rate of the fuel injection quantity under the compression stroke in the exhaust gas temperature rise mode and in the exhaust gas composition mode is larger than that in the normal mode.

28. An exhaust purification apparatus for an internal combustion engine according to any one of the preceding claims 1 to 24, **characterized in that** a whole air-fuel ratio in the exhaust gas composition mode is richer than that in the normal mode (λ > 1).

29. An exhaust purification apparatus for an internal combustion engine according to any one of the preceding claims 5 to 15 and 17 to 24, **characterized in that** a whole air-fuel ratio in the exhaust gas composition mode is richer than that in the exhaust gas temperature rise mode.

30. An exhaust purification apparatus for an internal combustion engine according to any one of the preceding claims 1 to 24, **characterized in that** a fuel injection timing of a fuel injection under a compression stroke in the exhaust gas composition mode is set toward a more advance angle direction than that in the normal mode.

31. An exhaust purification apparatus for an internal combustion engine according to any one of the preceding claims 5 to 15 and 17 to 24, **characterized in that** a fuel injection timing of a fuel injection under a compression stroke in the exhaust gas composition mode is set toward a more advance angle direction than that in the exhaust gas temperature rise mode.

32. An exhaust purification method for an internal combustion engine, the internal combustion engine comprising:
an exhaust gas purification catalyst (11) disposed in an exhaust passage (10) of the engine (1), and the exhaust purification method comprising:
executing (20) a SOx-poisoning release control of the exhaust gas purification catalyst when a predetermined condition is established,
**characterized in that**
said SOx-poisoning release control comprises an exhaust gas temperature rise mode, an exhaust gas composition mode and a catalyst temperature maintaining mode, the method comprises the steps of:
setting an ignition timing in the exhaust gas composition mode toward a more advance angle direction than that in the exhaust gas temperature rise mode and the catalyst temperature maintaining mode, and
manipulating a parameter of the engine related to an exhaust gas composition in such a manner that a hydrogen concentration in the exhaust gas in the exhaust gas composition mode is higher than that in the catalyst temperature maintaining mode.

## Patentansprüche

1. Abgasreinigungsvorrichtung für einen Verbrennungsmotor, die umfasst:
einen Abgasreinigungs-Katalysator (11), der in einem Abgaskanal (10) des Motors (1) angeordnet ist; und
eine Steuereinrichtung (20), die eine SOx-Verunreinigungs-Freisetzungssteuerung des Abgasreinigungs-Katalysators durchführt, wenn eine vorgegebene Bedingung hergestellt ist, **dadurch gekennzeichnet, dass**
die SOx-Verunreinigungs-Freisetzungssteuerung einen Abgastemperaturerhöhungs-Modus, einen Abgaszusammensetzungs-Modus und einen Katalysator-Temperaturaufrechterhaltungs-Modus umfasst, wobei ein Zündzeitpunkt in dem Abgaszusammensetzungs-Modus in Richtung einer stärkeren Frühverstellung eingestellt wird als in dem Abgastemperaturerhöhungs-Modus und dem Katalysator-Temperaturaufrechterhaltungs-Modus und ein Manipulationsparameter des Motors, der sich auf eine Abgaszusammensetzung bezieht, so manipuliert wird, dass in dem Abgaszusammensetzungs-Modus eine Wasserstoffkonzentration in dem Abgas höher ist als in dem Katalysator-Temperaturaufrechterhaltungs-Modus.

2. Abgasreinigungsvorrichtung für einen Verbrennungsmotor nach Anspruch 1, **dadurch gekennzeichnet, dass** der Modus der SOx-Verunreinigungs-Freisetzungssteuerung von dem Abgaszusammensetzungs-Modus zu dem Normal-Modus umgeschaltet wird, wenn eine Temperatur (Tc) des Abgasreinigungs-Katalysators ansteigt und über einem ersten vorgegebenen Wert (T1) liegt.

3. Abgasreinigungsvorrichtung für einen Verbrennungsmotor nach Anspruch 2, **dadurch gekennzeichnet, dass** der erste vorgegebene Wert (T1) auf eine Temperatur festgelegt ist, bei der eine SOx-Verunreinigungsfreisetzungs-Leistung stabil wird.

4. Abgasreinigungsvorrichtung für einen Verbrennungsmotor nach einem der vorangehenden Ansprüche 1 bis 3, **dadurch gekennzeichnet, dass** in dem Abgaszusammensetzungs-Modus ein Zündzeitpunkt stärker in Richtung einer Frühverstellung eingestellt wird als in dem Normal-Modus.

5. Abgasreinigungsvorrichtung für einen Verbrennungsmotor nach einem der vorangehenden Ansprüche 1 bis 4, **dadurch gekennzeichnet, dass** die SOx-Verunreinigungsfreisetzungs-Steuerung des Weiteren einen Abgastemperaturerhöhungs-Modus vor dem Abgaszusammensetzungs-Modus einschließt und in dem Abgastemperaturerhöhungs-Modus ein Anteil einer Kraftstoffeinspritzmenge in dem Verdichtungstakt an einer Gesamt-Kraftstoffeinspritzmenge für vier Takte des Motors pro Zylinder größer ist als in dem Normal-Modus.

6. Abgasreinigungsvorrichtung für einen Verbrennungsmotor nach einem der vorangehenden Ansprüche 1 bis 4, **dadurch gekennzeichnet, dass** die SOx-Verunreinigungsfreisetzungs-Steuerung des Weiteren einen Abgastemperaturerhöhungs-Modus vor dem Abgaszusammensetzungs-Modus einschließt und in dem Abgastemperaturerhöhungs-Modus ein Anteil einer Kraftstoffeinspritzmenge in dem Verdichtungstakt an einer Gesamt-Kraftstoffeinspritzmenge für vier Takte des Motors größer ist als in dem Abgaszusammensetzungs-Modus.

7. Abgasreinigungsvorrichtung für einen Verbrennungsmotor nach einem der vorangehenden Ansprüche 1 bis 4, **dadurch gekennzeichnet, dass** die SOx-Verunreinigungsfreisetzungs-Steuerung des Weiteren einen Abgastemperaturerhöhungs-Modus vor dem Abgaszusammensetzungs-Modus einschließt und in dem Abgastemperaturerhöhungs-Modus ein Anteil einer Kraftstoffeinspritzmenge in dem Verdichtungstakt an einer Gesamt-Kraftstoffeinspritzmenge für vier Takte des Motors pro Zylinder größer ist als in dem Abgaszusammensetzungs-Modus und in dem Normal-Modus.

8. Abgasreinigungsvorrichtung für einen Verbrennungsmotor nach einem der vorangehenden Ansprüche 1 bis 7, **dadurch gekennzeichnet, dass** die SOx-Verunreinigungsfreisetzungs-Steuerung des Weiteren einen Abgastemperaturerhöhungs-Modus vor dem Abgaszusammensetzungs-Modus einschließt und in dem Abgastemperaturerhöhungs-Modus ein Zündzeitpunkt in Richtung einer stärkeren Spätverstellung eingestellt wird als in dem Abgaszusammensetzungs-Modus.

9. Abgasreinigungsvorrichtung für einen Verbrennungsmotor nach einem der vorangehenden Ansprüche 5 bis 8, **dadurch gekennzeichnet, dass**, wenn die Temperatur (Tc) des Katalysators ansteigt und über einem zweiten vorgegebenen Wert (T2) liegt, der Modus von dem Abgastemperaturerhöhungs-Modus zu dem Abgaszusammensetzungs-Modus umgeschaltet wird.

10. Abgasreinigungsvorrichtung für einen Verbrennungsmotor nach Anspruch 9, **dadurch gekennzeichnet, dass** der zweite vorgegebene Wert (T2) eine Temperatur ist, bei der die SOx-Verunreinigungsfreisetzungs-Steuerung gestartet wird.

11. Abgasreinigungsvorrichtung für einen Verbrennungsmotor nach einem der vorangehenden Ansprüche 5 bis 10, **dadurch gekennzeichnet, dass** die Kraftstoffeinspritzmenge in die Kraftstoffeinspritzmenge in dem Verdichtungstakt und diejenige in dem Ansaugtakt geteilt wird und in dem Abgastemperaturerhöhungs-Modus die Kraftstoffeinspritzmenge in dem Verdichtungstakt größer ist als in dem Ansaugtakt.

12. Abgasreinigungsvorrichtung für einen Verbrennungsmotor nach einem der vorangehenden Ansprüche 5 bis 11, **dadurch gekennzeichnet, dass** die Kraftstoffeinspritzmenge in die Kraftstoffeinspritzmenge in dem Verdichtungstakt und diejenige in dem Ansaugtakt geteilt wird und in dem Abgaszusammensetzungs-Modus die Kraftstoffeinspritzmenge in dem Verdichtungstakt im Wesentlichen genauso groß ist wie in dem Ansaugtakt.

13. Abgasreinigungsvorrichtung für einen Verbrennungsmotor nach einem der vorangehenden Ansprüche 5 bis 12, **dadurch gekennzeichnet, dass** die Kraftstoffeinspritzmenge in die Kraftstoffeinspritzmenge in dem Verdichtungstakt und diejenige in dem Ansaugtakt geteilt wird und dass in dem Normal-Modus die Kraftstoffeinspritzmenge in dem Verdichtungstakt im Wesentlichen genauso groß ist wie in dem Ansaugtakt.

14. Abgasreinigungsvorrichtung für einen Verbrennungsmotor nach einem der vorangehenden Ansprüche 5 bis 13, **dadurch gekennzeichnet, dass** ein Anteil einer Kraftstoffeinspritzmenge in dem Verdichtungstakt an einer Gesamt-Kraftstoffeinspritzmenge für vier Takte des Motors pro Zylinder in dem Abgaszusammensetzungs-Modus kleiner ist als in dem Abgastemperaturerhöhungs-Modus und ein Zündzeitpunkt in dem Abgaszusammensetzungs-Modus weiter in einer Frühverstellungsrichtung verstellt wird als in dem Abgastemperaturerhöhungs-Modus.

15. Abgasreinigungsvorrichtung für einen Verbrennungsmotor nach einem der vorangehenden Ansprüche 5 bis 14, **dadurch gekennzeichnet, dass** ein Anteil einer Kraftstoffeinspritzmenge während des Verdichtungstaktes an einer Gesamt-Kraftstoffeinspritzmenge für die vier Takte des Motors pro Zylinder in dem Abgaszusammensetzungs-Modus im Wesentlichen genauso groß ist wie in dem Normal-Modus und ein Zündzeitpunkt in dem Abgaszusammensetzungs-Modus weiter zu einer Frühverstellungsseite hin verstellt wird als in dem Normal-Modus.

16. Abgasreinigungsvorrichtung für einen Verbrennungsmotor nach Anspruch 1, **dadurch gekennzeichnet, dass** der Modus von dem Abgaszusammensetzungs-Modus zu dem Normal-Modus umgeschaltet wird, wenn eine Temperatur (Tc) des Katalysators ansteigt und über einem ersten vorgegebenen Wert (T1) liegt.

17. Abgasreinigungsvorrichtung für einen Verbrennungsmotor nach einem der vorangehenden Ansprüche 1 oder 16, **dadurch gekennzeichnet, dass** die SOx-Verunreinigungsfreisetzungs-Steuerung des Weiteren einen Abgastemperaturerhöhungs-Modus vor dem Abgaszusammensetzungs-Modus enthält und in dem Abgastemperaturerhöhungs-Modus der Zündzeitpunkt in Richtung einer stärkeren Spätverstellung eingestellt wird als in dem Abgaszusammensetzungs-Modus.

18. Abgasreinigungsvorrichtung für einen Verbrennungsmotor nach Anspruch 17, **dadurch gekennzeichnet, dass** ein Anteil einer Kraftstoffeinspritzmenge in dem Verdichtungstakt an einer Gesamt-Kraftstoffeinspritzmenge für vier Takte des Motors pro Zylinder in dem Abgastemperaturerhöhungs-Modus größer ist als in dem Abgaszusammensetzungs-Modus.

19. Abgasreinigungsvorrichtung für einen Verbrennungsmotor nach Anspruch 17, **dadurch gekennzeichnet, dass** ein Anteil einer Kraftstoffeinspritzmenge in dem Verdichtungstakt an einer Gesamt-Kraftstoffeinspritzmenge für vier Takte des Motors pro Zylinders in dem Abgastemperaturerhöhungs-Modus größer ist als in dem Normal-Modus.

20. Abgasreinigungsvorrichtung für einen Verbrennungsmotor nach Anspruch 17, **dadurch gekennzeichnet, dass** ein Anteil der Kraftstoffeinspritzmenge in dem Verdichtungstakt für vier Takte des Motors pro Zylinder in dem Abgastemperaturerhöhungs-Modus größer ist als in dem Abgaszusammensetzungs-Modus und in dem Normal-Modus.

21. Abgasreinigungsvorrichtung für einen Verbrennungsmotor nach einem der vorangehenden Ansprüche 17 bis 20, **dadurch gekennzeichnet, dass** der Modus von dem Abgastemperaturerhöhungs-Modus auf den Abgaszusammensetzungs-Modus umgeschaltet wird, wenn eine Temperatur (Tc) des Katalysators ansteigt und über einem zweiten vorgegebenen Wert (T2) liegt.

22. Abgasreinigungsvorrichtung für einen Verbrennungsmotor nach einem der vorangehenden Ansprüche 17 bis 21, **dadurch gekennzeichnet, dass** der Zündzeitpunkt in den Abgastemperaturerhöhungs-Modus in Richtung einer stärkeren Spätverstellung eingestellt wird als während einer normalen homogenen Verbrennung.

23. Abgasreinigungsvorrichtung für einen Verbrennungsmotor nach einem der vorangehenden Ansprüche 17 bis 22, **dadurch gekennzeichnet, dass** der Zündzeitpunkt in dem Abgaszusammensetzungs-Modus in Richtung einer stärkeren Spätverstellung eingestellt wird als während einer normalen homogenen Verbrennung.

24. Abgasreinigungsvorrichtung für einen Verbrennungsmotor nach einem der vorangehenden Ansprüche 17 bis 23, **dadurch gekennzeichnet, dass** der Zündzeitpunkt in dem Normal-Modus in Richtung einer stärkeren Spätverstellung eingestellt wird als während einer normalen homogenen Verbrennung.

25. Abgasreinigungsvorrichtung für einen Verbrennungsmotor nach einem der vorangehenden Ansprüche 1 bis 24, **dadurch gekennzeichnet, dass** ein Gesamt-Luft/Kraftstoff-Verhältnis während der SOx-Verunreinigungsfreisetzungs-Steuerung annähernd ein stöchiometrisches Luft/Kraftstoff-Verhältnis (λ = 1) ist.

26. Abgasreinigungsvorrichtung für einen Verbrennungsmotor nach Anspruch 1 oder 5, **dadurch gekennzeichnet, dass** der Anteil der Kraftstoffeinspritzmenge in dem Verdichtungstakt in dem Abgaszusammensetzungs-Modus größer ist als in dem Normal-Modus.

27. Abgasreinigungsvorrichtung für einen Verbrennungsmotor nach Anspruch 5, **dadurch gekennzeichnet, dass** jeder Anteil der Kraftstoffeinspritzmenge in dem Verdichtungstakt in dem Abgastemperaturerhöhungs-Modus und in dem Abgaszusammensetzungs-Modus größer als in dem Normal-Modus.

28. Abgasreinigungsvorrichtung für einen Verbrennungsmotor nach einem der vorangehenden Ansprüche 1 bis 24, **dadurch gekennzeichnet, dass** ein Gesamt-Luft/Kraftstoff-Verhältnis in dem Abgaszusammensetzungs-Modus fetter ist als in dem Normal-Modus (λ > 1)

29. Abgasreinigungsvorrichtung für einen Verbrennungsmotor nach einem der vorangehenden Ansprüche 5 bis 15 und 17 bis 24, **dadurch gekennzeichnet, dass** ein Gesamt-Luft/Kraftstoff-Verhältnis in dem Abgaszusammensetzungs-Modus fetter ist als in dem Abgastemperaturerhöhungs-Modus.

30. Abgasreinigungsvorrichtung für einen Verbrennungsmotor nach einem der vorangehenden Ansprüche 1 bis 24, **dadurch gekennzeichnet, dass** ein Kraftstoffeinspritzzeitpunkt einer Kraftstoffeinspritzung in einem Verdichtungstakt in dem Abgaszusammensetzungs-Modus in Richtung einer stärkeren Frühverstellung eingestellt wird als in dem Normal-Modus.

31. Abgasreinigungsvorrichtung für einen Verbrennungsmotor nach einem der vorangehenden Ansprüche 5 bis 15 und 17 bis 24, **dadurch gekennzeichnet, dass** ein Kraftstoffeinspritzzeitpunkt einer Kraftstoffeinspritzung bei einem Verdichtungstakt in dem Abgaszusammensetzungs-Modus in Richtung einer stärkeren Frühverstellung eingestellt wird als in dem Abgastemperaturerhöhungs-Modus.

32. Abgasreinigungsvorrichtung für einen Verbrennungsmotor, wobei der Verbrennungsmotor umfasst:
einen Abgasreinigungs-Katalysator (11), der in einem Abgaskanal (10) des Motors (1) angeordnet ist, wobei das Abgasreinigungsverfahren umfasst:
Ausführen (20) einer SOx-Verunreinigungsfreisetzungs-Steuerung des Abgasreinigungs-Katalysators, wenn eine vorgegebene Bedingung hergestellt ist,
**dadurch gekennzeichnet, dass**
die SOx-Verunreinigungsfreisetzungs-Steuerung einen Abgastemperaturerhöhungs-Modus, einen Abgaszusammensetzungs-Modus und einen Katalysator-Temperaturaufrechterhaltungs-Modus umfasst, wobei das Verfahren die folgenden Schritte umfasst:
Einstellen eines Zündzeitpunkts in dem Abgaszusammensetzungs-Modus in Richtung einer stärkeren Frühverstellung als in dem Abgastemperaturerhöhungs-Modus und dem Katalysator-Temperaturaufrechterhaltungs-Modus, und
Manipulieren eines Parameters des Motors bezüglich einer Abgaszusammensetzung so, dass in dem Abgaszusammensetzungs-Modus eine Wasserstoffkonzentration in dem Abgas höher ist als in dem Katalysator-Temperaturaufrechterhaltungs-Modus.

## Revendications

1. Appareil de purification des gaz d'échappement pour un moteur à combustion interne, comprenant:
un catalyseur de purification des gaz d'échappement (11) disposé dans un passage d'échappement (10) du moteur (1); et
un dispositif de commande (20) qui exécute une commande de libération d'empoisonnement-SOx du catalyseur de purification des gaz d'échappement lorsqu'un état prédéterminé est établi, **caractérisé en ce que**
ladite commande de libération d'empoisonnement SOx comprend un mode d'augmentation de température des gaz d'échappement, un mode de composition des gaz d'échappement et un mode de maintien de la température du catalyseur, où un réglage du calage de l'allumage en mode de composition des gaz d'échappement étant réglé vers une direction d'angle plus avancée qu'en mode d'augmentation de la température des gaz d'échappement et qu'en mode de maintien de la température du catalyseur, et un paramètre de manipulation du moteur lié à une composition des gaz d'échappement étant manipulé de telle manière qu'une concentration d'hydrogène dans les gaz d'échappement en mode de composition des gaz d'échappement est plus élevée qu'en mode de maintien de la température du catalyseur.

2. Appareil de purification des gaz d'échappement pour un moteur à combustion interne selon la revendication 1, **caractérisé en ce que** le mode de la commande de libération d'empoisonnement-SOx est commuté du mode de composition des gaz d'échappement au mode normal lorsqu'une température (Tc) du catalyseur de purification des gaz d'échappement devient élevée et dépasse une première valeur prédéterminée (T1).

3. Appareil de purification des gaz d'échappement pour un moteur à combustion interne selon la revendication 2, **caractérisé en ce que** la première valeur prédéterminée (T1) est réglée à une température à laquelle la performance de libération d'empoisonnement-SOx devient stable.

4. Appareil de purification des gaz d'échappement pour un moteur à combustion interne selon l'une quelconque des revendications précédentes 1 à 3, **caractérisé en ce qu'**en mode de composition d'échappement, un réglage du calage de l'allumage est réglé vers une direction d'angle d'avance supérieure à celle en mode normal.

5. Appareil de purification des gaz d'échappement pour un moteur à combustion interne selon l'une quelconque des revendications précédentes 1 à 4, **caractérisé en ce que** la commande de libération d'empoisonnement-SOx comporte en outre un mode d'augmentation de température des gaz d'échappement avant le mode de composition des gaz d'échappement et, en mode d'augmentation de la température des gaz d'échappement, un taux de quantité d'injection de combustible sous la course de compression à une quantité d'injection de combustible totale pour quatre courses du moteur par cylindre est plus grand que celui en mode normal.

6. Appareil de purification des gaz d'échappement pour un moteur à combustion interne selon l'une quelconque des revendications précédentes 1 à 4, **caractérisé en ce que** la commande de libération d'empoisonnement-SOx comporte en outre un mode d'augmentation de la température des gaz d'échappement avant le mode de composition des gaz d'échappement et, en mode d'augmentation de la température des gaz d'échappement, un taux de quantité d'injection de combustible sous la course de compression à une quantité d'injection de combustible totale pour quatre courses du moteur est plus grand que celui en mode de composition des gaz d'échappement.

7. Appareil de purification des gaz d'échappement pour un moteur à combustion interne selon l'une quelconque des revendications 1 à 4, **caractérisé en ce que** la commande de libération d'empoisonnement-SOx comporte en outre un mode d'augmentation de la température des gaz d'échappement avant le mode de composition des gaz d'échappement et, en mode d'augmentation de la température des gaz d'échappement, un taux de quantité d'injection de combustible sous la course de compression à une quantité d'injection de combustible totale pour quatre courses du moteur par cylindre est plus grand que celui en mode de composition des gaz d'échappement et que celui en mode normal.

8. Appareil de purification des gaz d'échappement pour un moteur à combustion interne selon l'une quelconque des revendications précédentes 1 à 7, **caractérisé en ce que** la commande de libération d'empoisonnement-SOx comporte en outre un mode d'augmentation de la température des gaz d'échappement avant le mode de composition des gaz d'échappement et, en mode d'augmentation de la température des gaz d'échappement, un réglage du calage de l'allumage est réglé vers une direction d'angle de plus grand retard qu'en mode de composition des gaz d'échappement.

9. Appareil de purification des gaz d'échappement pour un moteur à combustion interne selon l'une quelconque des revendications précédentes 5 à 8, **caractérisé en ce que**, lorsque la température (Tc) du catalyseur devient élevée et dépasse une deuxième valeur prédéterminée (T2), le mode est commuté du mode d'augmentation de la température des gaz d'échappement au mode de composition des gaz d'échappement.

10. Appareil de purification des gaz d'échappement pour un moteur à combustion interne selon la revendication 9, **caractérisé en ce que** la deuxième valeur prédéterminée (T2) est une température à laquelle la commande de libération d'empoisonnement-SOx est démarrée.

11. Appareil de purification des gaz d'échappement pour un moteur à combustion interne selon l'une quelconque des revendications précédentes 5 à 10, **caractérisé en ce que** la quantité d'injection de combustible est divisée en quantité d'injection de combustible sous la course de compression et celle sous la course d'aspiration, et la quantité d'injection de combustible sous la course de compression est plus grande que sous la course d'aspiration en mode d'augmentation de la température des gaz d'échappement.

12. Appareil de purification des gaz d'échappement pour un moteur à combustion interne selon l'une quelconque des revendications précédentes 5 à 11, **caractérisé en ce que** la quantité d'injection de combustible est divisé en quantité d'injection de combustible sous la course de compression et en celle sous la cours d'aspiration et, en mode de composition des gaz d'échappement, la quantité d'injection de combustible sous la course de compression est sensiblement égale à celle sous la course d'aspiration.

13. Appareil de purification des gaz d'échappement pour un moteur à combustion interne selon l'une quelconque des revendications précédentes 5 à 12, **caractérisé en ce que** la quantité d'injection de combustible est divisée en quantité d'injection de combustible sous la course de compression et en celle sous la course d'aspiration et, en mode normal, la quantité d'injection de combustible sous la course de compression est sensiblement égale à celle sous la course d'aspiration.

14. Appareil de purification des gaz d'échappement pour un moteur à combustion interne selon l'une quelconque des revendications précédentes 5 à 13, **caractérisé en ce qu'**un taux d'une quantité d'injection de combustible sous la course de compression à une quantité d'injection de combustible totale pour quatre courses du moteur par cylindre en mode de composition des gaz d'échappement est plus petit que celui en mode d'augmentation de la température des gaz d'échappement, et un réglage du calage de l'allumage en mode de composition des gaz d'échappement est plus avancé vers une direction d'angle d'avance que celui en mode d'augmentation de la température des gaz d'échappement.

15. Appareil de purification des gaz d'échappement pour un moteur à combustion interne selon l'une quelconque des revendications précédentes 5 à 14, **caractérisé en ce qu'**un taux d'une quantité d'injection de combustible durant la course de compression à une quantité d'injection de combustible totale pour les quatre courses du moteur par cylindre en mode de composition des gaz d'échappement est sensiblement égal à celui en mode normal, et un réglage du calage de l'allumage en mode de composition des gaz d'échappement est plus avancé vers le côté de l'angle d'avance que celui en mode normal.

16. Appareil de purification des gaz d'échappement pour un moteur à combustion interne selon la revendication 1, **caractérisé en ce que** le mode est commuté du mode de composition de gaz d'échappement au mode normal lorsqu'une température (Tc) du catalyseur devient élevée et dépasse une première valeur prédéterminée (T1).

17. Appareil de purification des gaz d'échappement pour un moteur à combustion interne selon l'une des revendications 1 ou 16, **caractérisé en ce que** la commande de libération d'empoisonnement SOx comporte en outre un mode d'augmentation de la température des gaz d'échappement avant le mode de composition des gaz d'échappement et, en mode d'augmentation de la température des gaz d'échappement, le réglage du calage de l'allumage est réglé vers une direction d'angle d'un plus grand retard que celui en mode de composition des gaz d'échappement.

18. Appareil de purification des gaz d'échappement pour un moteur à combustion interne selon la revendication 17, **caractérisé en ce qu'**un taux de quantité d'injection de combustible sous la course de compression à une quantité d'injection de combustible totale pour quatre courses du moteur par cylindre en mode d'augmentation de la température des gaz d'échappement est plus élevé que celui en mode de composition de gaz d'échappement.

19. Appareil de purification des gaz d'échappement pour un moteur à combustion interne selon la revendication 17, **caractérisé en ce qu'**un taux de quantité d'injection de combustible sous la course de compression à une quantité d'injection de combustible totale pour quatre courses du moteur par cylindre en mode d'augmentation de la température des gaz d'échappement est plus élevé que celui en mode normal.

20. Appareil de purification des gaz d'échappement pour un moteur à combustion interne selon la revendication 17, **caractérisé en ce qu'**un taux de quantité d'injection de combustible sous la course de compression pour quatre courses du moteur par cylindre en mode d'augmentation de la température des gaz d'échappement est plus élevé que celui en mode de composition des gaz d'échappement et celui en mode normal.

21. Appareil de purification des gaz d'échappement pour un moteur à combustion interne selon l'une quelconque des revendications précédentes 17 à 20, **caractérisé en ce que** le mode est commuté du mode d'augmentation de la température des gaz d'échappement au mode de composition des gaz d'échappement lorsqu'une température (Tc) du catalyseur devient élevée et dépasse une deuxième valeur prédéterminée (T2).

22. Appareil de purification des gaz d'échappement pour un moteur à combustion interne selon l'une quelconque des revendications précédentes 17 à 21, **caractérisé en ce que** le réglage du calage de l'allumage en mode d'augmentation de la température des gaz d'échappement est réglé vers une direction d'angle d'un plus grand retard que celui durant une combustion homogène normale.

23. Appareil de purification des gaz d'échappement pour un moteur à combustion interne selon l'une quelconque des revendications précédentes 17 à 22, **caractérisé en ce que** le réglage du calage de l'allumage en mode de composition des gaz d'échappement est réglé vers une direction d'angle d'un plus grand retard que celle durant une combustion homogène normale.

24. Appareil de purification des gaz d'échappement pour un moteur à combustion interne selon l'une quelconque des revendications précédentes 17 à 23, **caractérisé en ce que** le réglage du calage de l'allumage en mode normal est réglé vers une direction d'angle d'un plus grand retard que celle durant une combustion homogène normale.

25. Appareil de purification des gaz d'échappement pour un moteur à combustion interne selon l'une quelconque des revendications précédentes 1 à 24, **caractérisé en ce que** le rapport air-combustible total durant la commande de libération d'empoisonnement SOx est approximativement un rapport air-combustible stoechiométrique (λ = 1).

26. Appareil de purification des gaz d'échappement pour un moteur à combustion interne selon l'une quelconque des revendications 1 ou 5, **caractérisé en ce que** le taux de la quantité d'injection de combustible sous la course de compression en mode de composition des gaz d'échappement est plus grand que celui en mode normal.

27. Appareil de purification des gaz d'échappement pour un moteur à combustion interne selon la revendication 5, **caractérisé en ce que** chaque taux de quantité d'injection de combustible sous la course de compression en mode d'augmentation de la température des gaz d'échappement et en mode de composition des gaz d'échappement est plus grand que celui en mode normal.

28. Appareil de purification des gaz d'échappement pour un moteur à combustion interne selon l'une quelconque des revendications précédentes 1 à 24, **caractérisé en ce qu'**un rapport air-combustible total en mode de combustion des gaz d'échappement est plus riche que celui en mode normal (λ > 1).

29. Appareil de purification des gaz d'échappement pour un moteur à combustion interne selon l'une quelconque des revendications précédentes 5 à 15 et 17 à 24, **caractérisé en ce qu'**un rapport air-combustible total en mode de composition des gaz d'échappement est plus riche que celui en mode d'augmentation de la température des gaz d'échappement.

30. Appareil de purification des gaz d'échappement pour un moteur à combustion interne selon l'une quelconque des revendications précédentes 1 à 24, **caractérisé en ce qu'**un réglage du calage de l'allumage d'une injection de combustible sous une course de compression en mode de composition des gaz d'échappement est réglé vers une direction d'angle plus avancée que celle en mode normal.

31. Appareil de purification des gaz d'échappement pour un moteur à combustion interne selon l'une quelconque des revendications précédentes 5 à 15 et 17 à 24, **caractérisé en ce qu'**un calage de l'allumage de l'injection du combustible sous une course de compression en mode de composition des gaz d'échappement est réglé vers une direction d'angle plus avancé que celle en mode d'augmentation de la température des gaz d'échappement.

32. Procédé de purification des gaz d'échappement pour un moteur à combustion interne, le moteur à combustion interne comprenant:
un catalyseur de purification des gaz d'échappement (11) disposé dans un passage d'échappement (10) du moteur (1), et le procédé de purification des gaz d'échappement comprend:
exécuter (20) une commande de libération d'empoisonnement SOx du catalyseur de purification des gaz d'échappement lorsqu'une condition prédéterminée est établie,
**caractérisé en ce que**
ladite commande de libération d'empoisonnement-SOx comprend un mode d'augmentation de la température des gaz d'échappement, un mode de composition des gaz d'échappement et un mode de maintien de la température du catalyseur, le procédé comprend les étapes de:
régler un calage de l'allumage en mode de composition des gaz d'échappement vers une direction d'angle plus avancée que celle en mode d'augmentation de la température des gaz d'échappement et qu'en mode de maintien de la température du catalyseur, et
manipuler un paramètre du moteur lié à une composition des gaz d'échappement de telle manière qu'une concentration d'hydrogène dans les gaz d'échappement en mode de composition des gaz d'échappement est plus élevée que celle en mode de maintien de la température du catalyseur.
